# EUROPÄISCHE PATENTSCHRIFT

(11) **EP 2 614 118 B1**
(45) Veröffentlichungstag und Bekanntmachung des Hinweises auf die Patenterteilung: **25.11.2015**
(21) Anmeldenummer: 11757252.9
(22) Anmeldetag: 07.09.2011
(51) Int. Cl.: C09C 1/30

(54) **SILICIUMDIOXID-DISPERSIONEN**
SILICON DIOXIDE DISPERSIONS
DISPERSIONS DE DIOXYDE DE SILICIUM

(30) Priorität: 10.09.2010 EP 10009447
(43) Veröffentlichungstag der Anmeldung: 17.07.2013
(73) Patentinhaber: BASF SE, 67056 Ludwigshafen (DE)
(72) Erfinder: ELING, Berend, 49448 Lemförde (DE); BOUDOU, Marine, 68161 Mannheim (DE); AUFFARTH, Stefan, 49451 Holdorf (DE); REESE, Oliver, 68163 Mannheim (DE)
(86) Internationale Anmeldenummer: PCT/EP2011/065503
(87) Internationale Veröffentlichungsnummer: WO 2012/032099

(56) Entgegenhaltungen:
- EP-A1- 1 236 765
- WO-A1-2010/043530
- WO-A1-2010/054975
- WO-A1-2011/054774

## Beschreibung

Die Erfindung betrifft stabile Siliciumdioxid-Dispersionen sowie deren Verwendung zur Herstellung von Polyurethanen. Die Siliciumdioxid-Dispersionen sind weitgehend oder vorzugsweise vollständig frei von Wasser und enthalten Siliciumdioxid-Partikel mit einem mittleren Partikeldurchmesser von 1-150 nm und mindestens einen Kettenverlängerer. Die Siliciumdioxid-Partikel können mit einem Silan (S) modifiziert sein, das eine gegenüber Isocyanaten reaktive Gruppen enthält. Weiterhin kann in den Siliciumdioxid-Dispersionen ein Polyol, insbesondere ein Polyesterol und/oder eine Isocyanat-haltige Verbindung enthalten sein.

Die europäische Patentanmeldung PCT/EP 2010/053106 betrifft ein Verfahren zur Herstellung von Silica-haltigen Dispersionen enthaltend Polyetherole oder Polyetheramine und deren Verwendung zur Herstellung von Polyurethan-Werkstoffen. In diesem Verfahren werden die Silica-haltigen Dispersionen dadurch hergestellt, dass ein wässriges Kieselsol zunächst mit Polyetherol und/oder Polyetheramin versetzt wird. Anschließend erfolgt zumindest teilweise das Abdestillieren von Wasser,worauf die in der Dispersion enthaltenen Siliciumdioxid-Partikel mit einem Silan versetzt werden, das beispielsweise Alkyl- oder Cycloalkyl-Substituenten aufweist, die gegebenenfalls mit reaktiven Gruppen gegenüber einem Alkohol, einem Amin- oder einem Isocyanat versehen sind. Die Polyetherol-haltigen Siliciumdioxid-Dispersionen können zur Herstellung von Polyurethan-Werkstoffen eingesetzt werden, sofern zusätzlich ein organisches Isocyanat vorhanden ist. In einer Ausführungsform werden Polyesterole als mögliche Bestandteile von Polyisocyanat-Prepolymeren eingesetzt, die wiederum mit einem Polyol zum Polyurethan umgesetzt werden können.

WO 2010 / 043530 betrifft ein Verfahren zur Herstellung von Silica-haltigen Polyol-Dispersionen und deren Verwendung zur Herstellung von Polyurethanwerkstoffen. Die Silica-haltigen Polyole werden hergestellt, in dem wässriges Kieselsol mit einem mittleren Partikeldurchmesser von 1- 150 nm in mindestens einem organischen Lösungsmittel wie Methanol, Cyclohexanol oder Aceton versetzt wird. In dieses Gemisch wird ein Polyol hinzugegeben, worauf das organische Lösungsmittel und Wasser zumindest teilweise abdestilliert werden. Im Anschluss daran wird das Gemisch mit mindestens einem Silan versetzt, wodurch eine Oberflächenmodifizierung der Siliciumdioxid-Partikel durchgeführt wird. Sofern in dem Silica-haltigen Polyol zusätzlich ein organisches Polyisocyanat enthalten ist, können diese Gemische zur Herstellung von Polyurethanwerkstoffen verwendet werden. Als Polyole werden insbesondere Polyetherpolyole eingesetzt. Polyesterole wiederum werden nur als Bestandteil von Polyisocyanat-Prepolymeren eingesetzt.

Aufgabe der Erfindung ist es, stabile Dispersionen von Siliciumdioxid-Partikeln mit einem Durchmesser der Partikel von < 150 nm herzustellen. Eine weitere Aufgabe ist darin zusehen, Polyurethane mit verbesserten Eigenschaften herzustellen unter Verwendung der erfindungsgemäßen stabilen Siliciumdioxid-Dispersionen.

Die Aufgabe wird gelöst durch Siliciumdioxid-Dispersion, herstellbar nach einem Verfahren umfassend die folgenden Schritte:
a) Versetzen eines wässrigen Kieselsols (K), das einen mittleren Partikeldurchmesser von 1 bis 150 nm, einen Gehalt an Siliciumdioxid von 1 bis 60 Gew.-% und einen pH-Wert von 1 bis 6 aufweist, mit mindestens einem Kettenverlängerer unter Erhalt eines Gemisches (A) aus wässrigem Kieselsol und Kettenverlängerer,
b) Entfernen des Wassers aus dem in Schritt (a) erhaltenen Gemisch (A).

Die erfindungsgemäßen Siliciumdioxid-Dispersionen haben den Vorteil, dass sie sehr stabil sind und/oder als transparente Dispersionen vorliegen. Die erfindungsgemäßen Siliciumdioxid-Dispersionen lassen sich besonders vorteilhaft mit Polyolen, insbesondere Polyesterolen, kombinieren, wodurch aufgrund der gebildeten stabilen Polyol- bzw. Polyesterol-haltigen Dispersionen Polyurethane (PUs) mit verbesserten Eigenschaften hergestellt werden können. Die so hergestellten Polyurethane zeigen beispielsweise eine Verbesserung der Vicat-Erweichungstemperatur, der Spannungswerte bei verschiedenen Dehnungen oder eine deutliche Absenkung des Druckverformungsrestes und/oder des Abriebes. Durch die erfindungsgemäßen Siliciumdioxid-Dispersionen kann auf relativ einfache und kostengünstige Weise eine Verzweigung in den Polyurethanen hergestellt werden.

Obwohl die erfindungsgemäßen Siliciumdioxid-Dispersionen sehr breit eingesetzt werden können, ist deren Verwendung zur Herstellung von vor allem elastomeren Polyurethanen, insbesondere thermoplastisches Polyurethan (TPU), microzellulare Elastomere, Gießelastomere, RIM-Elastomere, Sprühelastomere, elastomere Beschichtungen und sogenannten "millable gums" bevorzugt. Der erzielbare Härtebereich für Polyurethan Elastomere kann variieren von 10 Shore A bis zu mehr als 75 Shore D. Darüber hinaus ist für solche Materialien die chemische Vernetzung, das heißt die Vernetzung erhältlich durch Einbau von monomeren Bausteinen mit einer Funktionalität höher als 2, gering. TPU hat zum Beispiel einen praktisch linearen Aufbau, was für die Verarbeitung dieses Materials in einem Spritzguss-Verfahren auch notwendig ist. So ist es vor allem bei diesen Materialien in vorteilhafterweise festzustellen, dass die Zugabe der erfindungsgemäßen Siliciumdioxid-Dispersionen weitere Verbesserungen der mechanischen Eigenschaften, insbesondere die mechanischen Eigenschaften bei höherer Temperatur, bewirkt. Ohne an eine Theorie gebunden werden zu wollen, wird angenommen, dass die mit NCO-reaktiven Gruppen versetzten Silikat-Teilchen eine Verzweigung im Polyurethan herbeiführen. Die Verzweigung oder Vernetzung durch die Einarbeitung der NCO-reaktiven Siliciumdioxid-Teilchen im Polyurethan wirkt sich besonders positiv aus auf dessen mechanischen Eigenschaften aus, wie die Erhöhung der Erweichungstemperatur, die Verbesserung der Druckverformung und/oder die Verbesserung des Abriebs.

Nachfolgend wir die Erfindung näher beschrieben.

Gemäß Schritt (a) werden die erfindungsgemäßen Siliciumdioxid-Dispersionen hergestellt durch Versetzen eines wässrigen Kieselsols (K), das einen mittleren Partikeldurchmesser von 1 bis 150 nm, einen Gehalt an Siliciumdioxid von 1 bis 60 Gew.-% und einen pH-Wert von 1 bis 6 aufweist, mit mindestens einem Kettenverlängerer unter Erhalt eines Gemisches (A) aus wässrigem Kieselsol und Kettenverlängerer.

Wässriges Kieselsol (K) als solches, das Siliciumdioxid-Partikel enthält, ist dem Fachmann prinzipiell bekannt. Die eingesetzten wässrigen Lösungen (K) von Polykieselsäureteilchen (Kieselsol) enthalten Teilchen mit einem mittleren Partikeldurchmesser von 1 bis 150 nm, bevorzugt 2 bis 120, besonders bevorzugt 3 bis 100, ganz besonders bevorzugt 4 bis 80, insbesondere 5 bis 50 und speziell 8 bis 40 nm.

Der Gehalt an Siliciumdioxid bzw. Kieselsäure (berechnet als SiO₂) beträgt von 1 bis 60 Gew.-%, bevorzugt von 5 bis 55, besonders bevorzugt 10 bis 40 Gew.-%. Es sind auch Kieselsole mit einem geringeren Gehalt einsetzbar, jedoch muss der Mehrgehalt an Wasser dann in dem späteren Schritt b) zusätzlich destillativ abgetrennt werden.

Bei den wässrigen Lösungen (K) handelt es sich vorzugsweise um kolloidale Lösungen von Polykieselsäure, die gegebenenfalls zu einem geringen Teil mit Alkalimetall-, Erdalkalimetall-, Ammonium-, Aluminium-, Eisen(II)-, Eisen(III)- und/oder Zirkoniumionen stabilisiert sein können, bevorzugt Alkalimetall-, Erdalkalimetall-, Ammonium- und/oder Eisen(III)ionen, besonders bevorzugt Alkalimetall-, Erdalkalimetall- und/oder Ammoniumionen, ganz besonders bevorzugt Alkalimetall- und/oder Erdalkalimetallionen und insbesondere Alkalimetallionen.

Unter den Alkalimetallionen sind Natrium- und/oder Kaliumionen bevorzugt, besonders bevorzugt sind Natriumionen.

Unter den Erdalkalimetallionen sind Magnesium-, Calcium- und/oder Berylliumionen bevorzugt, besonders bevorzugt sind Magnesium- und/oder Calciumionen, ganz besonders bevorzugt sind Magnesiumionen.

Das molare Verhältnis von Metallionen zu Siliciumatomen in (K) beträgt von 0:1 bis 0,1:1, bevorzugt von 0,002 bis 0,04 : 1.

Das eingesetzte Kieselsol (K) weist nach Einstellen des pH-Wertes einen pH-Wert der wässrigen Phase von 1 bis 6, bevorzugt von 2 bis 4 auf.

Unter einer wässrigen kolloidalen Lösung wird in dieser Schrift eine Lösung von gegebenenfalls stabilisierten Kieselsäurepartikeln mit einem mittleren Teilchendurchmesser zwischen 1 und 150 nm verstanden, die sich auch bei Lagerung über einen Zeitraum von einem Monat bei 20 °C nicht absetzen.

Unter einem Sol wird in dieser Schrift eine kolloiddisperse, inkohärente (d.h. jedes Teilchen ist frei beweglich) Lösung eines festen Stoffes in Wasser verstanden, hier als Kieselsol eine kolloiddisperse Lösung von Siliciumdioxid in Wasser.

Die erfindungsgemäß eingesetzten sauren wässrigen Kieselsole (K) können beispielsweise auf drei verschiedene Arten erhalten werden:
- durch Ansäuern der korrespondierenden alkalischen Kieselsole,
- durch Herstellung aus niedermolekularen Kieselsäuren, bevorzugt Wasserglas, d.h. salzartigen Teilchen mit einem Durchmesser unter 1 nm, oder
- durch Kondensation von Estern niedermolekularer Kieselsäuren.

Die wässrigen Lösungen von alkalischen Kieselsolen weisen in der Regel einen pH-Wert von 8 bis 12, bevorzugt von 8 bis 11 auf. Diese alkalischen Kieselsole sind kommerziell erhältlich und stellen mithin ein leicht verfügbares und bevorzugtes Ausgangsprodukt für das erfindungsgemäße Verfahren dar.

Die Herstellung der erfindungsgemäß einzusetzenden Kieselsole (K) aus diesen alkalischen Kieselsolen erfolgt durch Einstellen des gewünschten pH-Wertes in diesen Kieselsolen, beispielsweise Zugabe von Mineralsäuren oder Versetzen der alkalischen Kieselsole mit einem Ionentauscher. Bevorzugt ist die Einstellung des pH-Wertes mit Ionenaustauschern, insbesondere dann, wenn das Kieselsol mit einem Polyetheramin versetzt wird.

Das Ansäuern kann mit beliebigen Säuren erfolgen, bevorzugt mit Salzsäure, Salpetersäure, Phosphorsäure, Schwefelsäure, Essigsäure, Ameisensäure, Methylsulfonsäure, para-Toluolsulfonsäure oder auch durch Versetzen mit einem sauren Ionentauscher, bevorzugt durch Ansäuern mit Salzsäure, Salpetersäure, Phosphorsäure, Schwefelsäure oder Essigsäure, besonders bevorzugt mit Salzsäure, Salpetersäure oder Schwefelsäure und ganz besonders bevorzugt durch Ansäuern mit Schwefelsäure.

Es stellt eine bevorzugte Ausführungsform dar, die Kieselsole (K) durch Versetzen von alkalischen Kieselsolen mit einem Ionentauscher herzustellen. Dies hat zur Folge, dass in den Kieselsolen (K) der Elektrolytgehalt niedrig ist, beispielsweise weniger als 0,2 Gew.-% beträgt und bevorzugt weniger als 0,1 Gew.-%.

Unter Elektrolyten werden hier andere anorganische ionische Bestandteile als Silikate, Hydroxide und Protonen verstanden. Diese vorwiegend aus der Stabilisierung der alkalischen Kieselsole stammenden Elektrolyte werden zur Stabilisierung der Partikel nach deren Herstellung zu der Suspension zugegeben.

Denkbar ist auch die Herstellung der Kieselsole (K) aus Wasserglas durch Ansäuern, beispielsweise mit einem Ionentauscher oder durch Versetzen mit Mineralsäure. Als Wasserglas wird dafür bevorzugt Kalium- und/oder Natriumsilikat eingesetzt, das besonders bevorzugt ein Verhältnis von 1 bis 10 mol SiO₂ zu 1 mol Alkalioxid, ganz besonders bevorzugt 1,5 bis 6 und insbesondere 2 bis 4 mol SiO₂ zu 1 mol Alkalioxid aufweist.

In diesem Fall lässt man das Reaktionsgemisch reagieren, bis sich ein Kieselsol (K) der gewünschten Größe gebildet hat, und fährt dann mit dem erfindungsgemäßen Verfahren fort.

Die niedermolekularen Kieselsäuren (Ortho- und Oligokieselsäure) sind normalerweise nur in hochverdünnten wässrigen Lösungen mit einem Gehalt von wenigen Gew.-% stabil und werden dafür in der Regel vor der Weiterverwendung aufkonzentriert.

Weiterhin kann die Herstellung der Kieselsole (K) durch Kondensation von Estern niedermolekularer Kieselsäuren erfolgen. Dabei handelt es sich meist um C₁- bis C₄-Al kyl-, besonders Ethylester von Oligo- und insbesondere Orthokieselsäure, die im sauren oder basischen Milieu Kieselsole (K) bilden.

In Schritt (a) wird das wässrige saure Kieselsol mit der 0,001 bis 100-fachen Menge (bezogen auf die Menge des eingesetzten Kieselsols), bevorzugt 0,01 bis 50-fachen Menge, besonders bevorzugt 0,05 bis 30-fachen Menge, an (mindestens einem) Kettenverlängerer versetzt.

Ein Kettenverlängerer als solcher ist dem Fachmann prinzipiell bekannt. Erfindungsgemäß wird vorzugsweise ein Kettenverlängerer eingesetzt, gegebenenfalls können auch Gemische aus zwei und mehr Kettenverlängerern eingesetzt werden.

Als Kettenverlängerer werden vorzugsweise Verbindungen mit einem Molekulargewicht von kleiner als 600 g/mol eingesetzt, beispielsweise Verbindungen mit 2 gegenüber Isocyanaten reaktiven Wasserstoffatomen. Diese können einzeln oder aber auch in Form von Mischungen eingesetzt werden. Vorzugsweise werden Diole mit Molekulargewichten kleiner als 300 g/mol eingesetzt. In Betracht kommen beispielsweise aliphatische, cycloaliphatische und/oder araliphatische Diole mit 2 bis 14, vorzugsweise 2 bis 10 Kohlenstoffatomen, insbesondere Alkylenglykole. Geeignet sind somit auch niedermolekulare hydroxylgruppenhaltige Polyalkylenoxide auf Basis Ethylen- und/oder 1,2-Propylenoxid. Bevorzugte Kettenverlängerer sind (Mono-)Ethylenglykol, 1,2 Propandiol, 1,3-Propandiol, Pentandiol, Tripropylenglykol, 1,10-Decandiol, 1,2-, 1,3-, 1,4-Dihydroxycyclohexan, Diethylenglykol, Triethylenglykol, Dipropylenglykol, 1,4-Butandiol, 1,6-Hexandiol, 2-Methylpropan-1,3-diol, 2,2-Dimethylpropan-1,3-diol, Bisphenol-A-bis(hydroxyether), Ethanolamin, N-Phenyldiethanolamin, Phenylendiamin, Diethyltoluoldiamin, Polyetheramine und Bis-(2-hydroxyethyl)-hydrochinon. Besonders bevorzugt werden als Kettenverlängerer Monoethylenglykol, Diethylenglykol, 2-Methyl-1,3-Propandiol, 1,4-Butandiol, 1,5-Pentandiol, 1,6- Hexandiol oder Mischungen davon eingesetzt, ganz besondes bevorzugt sind 1,4-Butandiol oder Monoethylenglykol.

Durch das Versetzen des vorstehend beschriebenen wässrigen Kieselsols (K) mit mindestens einem Kettenverlängerer wird erfindungsgemäß das Gemisch (A) erhalten. Das Gemisch (A) umfasst somit das wässrige Kieselsol und den Kettenverlängerer. Gegebenenfalls können im Gemisch (A) auch weitere Komponenten, wie organische Lösungsmittel oder Zusatzstoffe enthalten sein. In einer Ausführungsform der vorliegenden Erfindung sind im Gemisch (A) außer dem wässrigen Kieselsol und dem Kettenverlängerer keine weiteren Komponenten enthalten, vorzugsweise besteht das Gemisch (A) im Wesentlichen aus wässrigem Kieselsol und Kettenverlängerer.

In Schritt (b) wird von dem in Schritt (a) erhaltenen Gemisch (A) Wasser entfernt, vorzugsweise abdestilliert. Nach Entfernen des Wassers liegt immer noch eine Siliciumdioxid-Dispersion vor, in der neben den Siliciumdioxid-Partikeln der Kettenverlängerer enthalten ist.

Das Entfernen, vorzugsweise Destillieren, von Wasser erfolgt unter Normaldruck oder vermindertem Druck, bevorzugt bei 1 bis 800 mbar, besonders bevorzugt bei 5 bis 100 mbar. Anstelle einer Destillation kann die Entfernung des Wassers auch durch Absorption, Pervaporation oder Diffusion über Membranen erfolgen.

Die Temperatur, bei der die Destillation erfolgt, richtet sich nach der Siedetemperatur von Wasser bei dem jeweiligen Druck. Bevorzugt beträgt die Temperatur nicht mehr als 140 °C, besonders bevorzugt nicht mehr als 100 °C.

Die Destillation kann diskontinuierlich, semikontinuierlich oder kontinuierlich erfolgen.

Beispielsweise kann sie diskontinuierlich aus einem Rührkessel erfolgen, dem gegebenenfalls eine kurze Rektifikationskolonne aufgesetzt sein kann.

Die Wärmezufuhr bei dem Rührkessel erfolgt über innen- und/oder außenliegende Wärmetauscher herkömmlicher Bauart und/oder Doppelwandheizung, vorzugsweise außenliegende Umlaufverdampfer mit Natur- oder Zwangsumlauf. Die Durchmischung des Reaktionsgemisches erfolgt auf bekannte Weise, z. B. durch Rühren, Umpumpen oder Naturumlauf.

Kontinuierlich erfolgt die Destillation bevorzugt durch Überleiten der Destillationsvorlage über einen Fallfilmverdampfer oder einen Wärmetauscher.

Als Destillationsapparat dafür geeignet sind sämtliche dem Fachmann bekannte Destillationsapparate, z.B. Umlaufverdampfer, Dünnfilmverdampfer, Fallfilmverdampfer, Wischblattverdampfer, gegebenenfalls jeweils mit aufgesetzten Rektifikationskolonnen sowie Strippkolonnen. Als Wärmetauscher geeignet sind beispielsweise Robert-Verdampfer oder Röhren- oder Plattenwärmetauscher.

Das im Gemisch (A) enthaltene Wasser wird vorzugsweise vollständig entfernt, insbesondere vollständig abdestilliert. Der Gehalt an Siliciumdioxid (Silikaten) in der resultierenden Dispersion beträgt im Allgemeinen von 5 bis 60 Gew.-%, bevorzugt von 5 bis 50 Gew.-% und besonders bevorzugt von 10 bis 40 Gew.-%. Vorzugsweise wird die Entfernung des Wassers so durchgeführt, dass der Kettenverlängerer vollständig oder nahezu vollständig in der erfindungsgemäßen Siliciumdioxid-Dispersion verbleibt.

Der Restgehalt an Wasser in der Dispersion sollte weniger als 5 Gew.-% betragen, bevorzugt weniger als 3 Gew.-%, besonders bevorzugt weniger als 2 Gew.-%, ganz besonders bevorzugt weniger als 1 Gew.-%, insbesondere weniger als 0,5 Gew.-% und speziell weniger als 0,3 Gew.-% betragen. Die Mengen für den Restgehalt an Wasser sind auf die Siliciumdioxid-Dispersion bezogen, also die Menge an Siliciumdioxid-Partikel und Kettenverlängerer.

Vorzugsweise wird in Schritt (b) das Wasser bei schrittweise ansteigender Temperatur in einem Bereich von 30°C bis 75°C entfernt, insbesondere abdestilliert. Insbesondere wird das Wasser bei vermindertem Druck und schrittweise von 30°C bis 75°C ansteigender Temperatur über einen Zeitraum von 6 Stunden entfernt, wobei in den letzten 1 bis 2 Stunden die Temperatur 75°C beträgt.

Vorzugsweise wird das in den erfindungsgemäßen Siliciumdioxid-Dispersionen enthaltene Siliciumdioxid mit mindestens einem Silan (S) modifiziert, das eine gegenüber Isocyanaten reaktive Gruppe enthält.

Die Modifizierung mit dem Silan (S) erfolgt auf der Oberfläche der in den erfindungsgemäßen Siliciumdioxid-Dispersionen enthaltenen (jeweiligen) Siliciumdioxid-Partikel. Verfahren zur Oberflächenmodifizierung (auch als Silanisierung bezeichnet) als solche sind dem Fachmann bekennt. Erfindungsgemäß wird die (Oberflächen-)Modifizierung der jeweiligen Siliciumdioxid-Partikel durchgeführt, nachdem das Wasser aus dem Gemisch (A) entfernt worden ist. Gegebenenfalls können zwischen Entfernung des Wassers aus dem Gemisch (A) und der Modifikation mit dem Silan (S) ein oder mehrere zusätzliche Schritte durchgeführt werden.

Das Silan (S) enthält eine gegenüber Isocyanaten reaktive Gruppe. Gegebenenfalls können in dem Silan (S) auch zwei oder mehr gegenüber Isocyanaten reaktive Gruppen enthalten sein, vorzugsweise ist eine gegenüber Isocyanaten reaktive Gruppe enthalten. Erfindungsgemäß ist diese Gruppe auch nach der Oberflächenmodifizierung der Siliciumdioxid-Partikel mit dem Silan (S) reaktiv gegenüber Isocyanaten. In anderen Worten ausgedrückt bedeutet dies, dass nach der Oberflächenmodifizierung der Siliciumdioxid-Partikel mit dem Silan (S) die modifizierten Siliciumdioxid-Partikel eine gegenüber Isocyanaten reaktive Gruppe aufweisen. Gegebenenfalls wird die gegenüber Isocyanaten reaktive Gruppe während der Oberflächenmodifizierung der Siliciumdioxid-Partikel nach dem Fachmann bekannten Methoden mit einer Schutzgruppe versehen. Siliciumdioxid-Dispersionen enthaltend i) mindestens einen Kettenverlängerer und ii) Siliciumdioxid, das mit mindestens einem Silan (S) modifiziert ist, das eine gegenüber Isocyanaten reaktive Gruppe enthält, sind somit ein weiterer Gegenstand der vorliegenden Erfindung.

Geeignete Silane (S) als solche und/oder gegenüber Isocyanaten reaktive Gruppen sind dem Fachmann bekannt. Bevorzugt ist eine gegenüber Isocyanaten reaktive Gruppe eine Amino- oder eine Hydroxyl-Gruppe. Folglich weist das Silan (S) vorzugsweise mindestens einen Hydroxyl-haltigen Substituenten und/oder mindestens einen Amino-haltigen Substituenten auf. Weiterhin können auch eine Thiolgruppe oder eine Epoxygruppe als gegenüber Isocyanaten reaktive Gruppen verwendet werden.

Vorzugsweise weist das Silan (S) zusätzlich mindestens eine Silylgruppe auf, die mindestens einfach alkoxyliert ist. Gegebenenfalls können im Silan (S) auch zwei oder mehr Silylgruppen enthalten sein, die jeweils wiederum mindestens einfach alkoxyliert sind. Bevorzugt ist ein Silan (S), das genau eine mindestens einfach alkoxylierte Silylgruppe aufweist, beispielsweise eine ein- bis dreifach, bevorzugt zwei- bis dreifach, besonders bevorzugt eine dreifach alkoxylierte Silylgruppe.

Zudem kann das Silan (S) mindestens einen Alkyl-, Cycloalkyl- und/oder ArylSubstituenten (Reste) aufweisen, wobei diese Substituenten gegebenenfalls weitere Heteroatome, wie O, S oder N, aufweisen können. Vorzugsweise sind im Silan (S) die Alkyl-, Cycloalkyl- und/oder Aryl-Reste und die gegenüber Isocyanaten reaktive Gruppen in einem Substituenten kombiniert. Ein solcher Substituent weist beispielsweise ein Alkylfragment auf, das wiederum mit einer Amino- oder eine Hydroxyl-Gruppe substituiert ist. Die gegenüber Isocyanaten reaktiven Gruppen sind also durch vorzugsweise 1 bis 20 Kohlenstoffatome aufweisende Alkylen-, Cycloalkylen oder Arylengruppen, bevorzugt Alkylengruppen, als sogenannte Spacergruppen, mit den Silylgruppen verbunden. Darüber hinaus können in den Silanen (S) aber auch Alkyl-, Cycloalkyl- und/oder Aryl-Reste enthalten sein, die nicht mit einer gegenüber Isocyanaten reaktiven Gruppe substituiert sind.

Beispiele für Alkylengruppen sind Methylen, 1,2-Ethylen (-CH₂-CH₂-), 1,2-Propylen (-CH(CH₃)-CH₂-) und/oder 1,3-Propylen (-CH₂-CH₂-CH₂-), 1,2-, 1,3- und/oder 1,4-Butylen, 1,1-Dimethyl-1,2-ethylen, 1,2-Dimethyl-1,2-ethylen, 1,6-Hexylen, 1,8-Octylen oder 1,10-Decylen, bevorzugt Methylen, 1,2-Ethylen, 1,2- oder 1,3-Propylen, 1,2-, 1,3- oder 1,4-Butylen, besonders bevorzugt Methylen, 1,2-Ethylen, 1,2- und/oder 1,3-Propylen und/oder 1,4-Butylen und ganz besonders bevorzugt Methylen, 1,2-Ethylen, 1,2- und/oder 1,3-Propylen.

Weiterhin geeignet sind Trialkoxysilane, welche mit einer Epoxyalkylgruppe, insbesondere mit einer Glycidoxypropylgruppe (-CH₂-CH₂-CH₂-O-CH₂-CH(O)CH₂)substituiert sind. Die Epoxygruppe kann mit Aminogruppen, beispielsweise von monofunktionellen Polyetheraminen oder Hydroxylgruppen aufweisenden Komponenten, beispielsweise hyperverzweigten Polyolen, reagieren.

Die Silane (S) können gegebenenfalls auch über weitere Heteroatome verfügen: beispiele hierfür sind 2-[Methoxy(polyethylenoxy)propyl]-trimethoxysilan, 3-Methoxypropyltrimethoxysilan, Bromphenyltrimethoxysilan, 3-Brompropyltrimethoxysilan, 2-Chlorethylmethyldimethoxysilan, (Heptadecafluoro-1,1,2,2-tetrahydrodecyl)triethoxysilan, (Heptadecafluoro-1,1,2,2-tetrahydrodecyl)trimethoxysilan, Diethylphosphatoethyltriethoxysilan, 2-(Diphenylphosphino)ethyl-triethoxysilan, 3-(N, N-Dimethylaminopropyl)trimethoxysilan, 3-Methoxypropyltrimethoxysilan, 3-(Methacryloxy)propyltrimethoxysilan, 3-Acryloxypropyltrimethoxysilan, 3-(Methacryloxy)propyltriethoxysilan oder 3-(Methacryloxy)propylmethyldimethoxysilan. Mehr bevorzugte Silane (S) sind 2-(3,4-Epoxycyclohexyl)ethyltriethoxysilan, 2-(3,4-Epoxycyclohexyl)ethyltrimethoxysilan, 3-Aminopropylmethyldimethoxysilan, 3-Aminopropyldimethylmethoxysilan, 3-Aminopropyldimethylethoxysilan, N-(2'-Aminoethyl)-3-aminopropylmethyldimethoxysilan, N-(2'-Aminoethyl)-3-aminopropylmethyldiethoxysilan, N-(2'-Aminoethyl)-3-aminopropylmethoxysilan, N-(2'-Aminoethyl)-3-aminopropylethoxysilan, 3-Mercaptopropyltrimethoxysilan, 3-Mercaptopropyltriethoxysilan, 4-Aminobutyltriethoxysilan, 1-Amino-2-(dimethylethoxysilyl)propan, (Aminoethylaminoethyl)phenethyltrimethoxysilan, N-(2-Aminoethyl)-3-aminopropyltriethoxysilan, p-Aminophenyltrimethoxysilan, 3-Aminopropylmethyldiethoxysilan, 3-Aminopropyltriethoxysilan, 3-Aminopropyltrimethoxysilan, 11-Aminoundecyltriethoxysilan, (3-Glycidoxypropyl)trimethoxysilan, (3-Glycidoxypropyl)triethoxysilan, N-(Hydroxyethyl)-N-Methylaminopropyltrimethoxysilan, Hydroxymethyltriethoxysilan, 3-Mercaptopropylmethyldimethoxysilan, 3-Mercaptopropylmethyldiethoxysilan, N-Methylaminopropylmethyldimethoxysilan, oder Bis(2-hydröxyethyl)-3-aminopropyltriethoxysilan.

Noch mehr bevorzugte Silane (S) sind Trialkoxysilane, welche mit den nachstehenden Gruppen substituiert sind:
- CH₂-CH₂-CH₂-NH₂
- CH₂-CH₂-CH₂-SH
- CH₂-CH₂-CH₂-NH-CH₂-CH₂-CH₂-NH₂
- CH₂-CH₂-CH₂-N(CH₂-CH₂OH)₂

Die vorgenannten Gruppen reagieren mit Isocyanatgruppen besonders gut und ergeben somit eine stabile kovalente Bindung der Siliciumdioxidpartikel an die PU-Matrix.

Besonders bevorzugte Silane (S) sind 3-Aminopropylmethyldimethoxysilan, 3-Aminopropyldimethylmethoxysilan, 3-Aminopropyldimethylethoxysilan, N-(2'-Aminoethyl)-3-aminopropylmethyldimethoxysilan, N-(2'-Aminoethyl)-3-aminopropylmethyldiethoxysilan, N-(2'-Aminoethyl)-3-aminopropylmethoxysilan, N-(2'-Aminoethyl)-3-aminopropylethoxysilan, 4-Aminobutyltriethoxysilan, N-(2-Aminoethyl)-3-aminopropyltriethoxysilan, p-Aminophenyltrimethoxysilan, 3-Aminopropylmethyldiethoxysilan, 3-Aminopropyltriethoxysilan, 3-Aminopropyltrimethoxysilan, 11-Aminoundecyltriethoxysilan, N-(Hydroxyethyl)-N-Methylaminopropyltrimethoxysilan, Hydroxymethyltriethoxysilan, oder Bis(2-hydroxyethyl)-3-aminopropyltriethoxysilan.

Vorzugsweise weist das Silan (S) also eine mindestens einfach alkoxylierte Silylgruppe, einen Hydroxyl- haltigen Substituenten, einen Amino-haltigen Substituenten, und/oder einen Alkyl-, Cycloalkyl- oder Arylsubstituenten auf.

Unter alkoxylierten Silylgruppen werden Gruppen

(R¹-O-)ₙ-Si-

verstanden, in denen
R¹ für C₁ bis C₂₀-Alkyl, bevorzugt C₁ bis C₄-Alkyl und
n für eine ganze Zahl von 1 bis 3, bevorzugt 2 bis 3 und besonders bevorzugt für 3 steht.

Beispiele für C₁ bis C₂₀-Alkyl sind Methyl, Ethyl, *iso*-Propyl, n-Propyl, n-Butyl, *iso*-Butyl, *sek*-Butyl, *tert*-Butyl, n-Hexyl, n-Heptyl, n-Octyl, 2-Ethylhexyl, n-Decyl, n-Dodecyl, n-Tetradecyl, n-Hexadecyl, n-Octadecyl und n-Eicosyl.

Beispiele für C₁ bis C₄-Alkyl sind Methyl, Ethyl, *iso*-Propyl, n-Propyl, n-Butyl, *iso*-Butyl, *sek*-Butyl und *tert*-Butyl.

Bevorzugte Reste R¹ sind Methyl, Ethyl, n-Butyl und tert-Butyl, besonders bevorzugt Methyl und Ethyl.

In einer weiteren Ausführungsform der vorliegenden Erfindung ist es bevorzugt, dass ein Silan (S) eingesetzt wird, das hergestellt wird durch Umsetzung von i) einem Trialkoxysilan, das mit einer Epoxyalkylgruppe substituiert ist, und ii) einem Polyetheramin. Gegebenenfalls können auch Gemische von 2 oder mehreren Verbindungen i) und/oder ii) eingesetzt werden. Weiterhin ist es auch möglich, die Verbindung ii) mit der Verbindung i) umzusetzen, nachdem das in der Dispersion enthaltene Siliciumdioxid mit der Verbindung i) modifiziert worden ist.

Vorzugsweise ist die Verbindung i) Glycidoxyalkyltrialkoxysilan mit Alkyl gleich Methyl, Ethyl oder Propyl und Alkoxy gleich Methoxy oder Ethoxy, insbesondere ist die Verbindung i) 3-Glycidoxypropyltrimethoxysilan.

Vorzugsweise ist die Verbindung ii) mono-, bi- oder tri-funktionelles Polyetheramin mit einem Molekulargewicht von 300 bis 5000, wobei sich die Funktionalität auf die Anzahl der enthaltenen Aminogruppen bezieht. Solche Polyethermine sind kommerziell erhältlich, beispielsweise unter der Bezeichnung "Jeffamine" von der Huntsman-Gruppe. Monofunktionelle Polyetheramine sind mehr bevorzugt als bifunktionelle Polyetheramine, die wiederum gegenüber trifunktionellen Polyetheraminen bevorzugt sind. Insbesondere ist die Verbindung (i) ein monofunktionelles Polyetheramin mit einem Molekulargewicht von 500 bis 2500. Ein Beispiel hierfür ist das kommerziell erhältliche Jeffamine^{®} M-2070 der Firma Huntsman Performance Chemicals, Everberg, Belgien.

Gegebenenfalls kann das Silan (S) auch in Gemischen mit mindestens einem (weiteren) Silan (S2) eingesetzt werden, wobei das Silan (S2) über keine gegenüber Isocyanaten reaktive Gruppen verfügt. Keine gegenüber Isocyanaten reaktive Gruppen bedeutet in diesem Zusammenhang, dass nach der Oberflächen-Modifizierung der Siliciumdioxid-Partikel durch das Silan (S2) auf den modifizierten Siliciumdioxid-Partikeln keine oder nur geringfügige Mengen (beispielsweise nicht vollständig umgesetzte Alkoxysubstituenten) an gegenüber Isocyanaten reaktive Gruppen enthalten sind, die vom Silan (S2) stammen. Die auf den modifizierten Siliciumdioxid-Partikeln enthaltenen gegenüber Isocyanaten reaktiven Gruppen stammen hingegen vom Silan (S).

Bevorzugte Silane (S2) sind Methyltrimethoxysilan, n-Propyltriethoxysilan, Dimethyldimethoxysilan, Phenyltrimethoxysilan, n-Octyltriethoxysilan, Isobutyltriethoxysilan, n-Butyltrimethoxysilan, t-Butyltrimethoxysilan, Methyltriethoxysilan, Benzyltriethoxysilan, Trimethylmethoxysilan, Vinyltrimethoxysilan, Vinyltriethoxysilan, Allyltrimethoxysilan, Allyltriethoxysilan, Butenyltriethoxysilan, n-Decyltriethoxysilan, Di-n-butyldimethoxysilan, Diisopropyldimethoxysilan, Dimethyldiethoxysilan, Dodecylmethyldiethoxysilan, Dodecyltriethoxysilan, Ethyltrimethoxysilan, Ethyltriethoxysilan, Hexadecyltriethoxysilan, Hexadecyltrimethoxysilan, Hexyltrimethoysilan, Hexyltriethoxysilan, Isobutylmethyltriethoxysilan, Isobutyltrimethoxysilan, n-Octadecyltriethoxysilan, n-Octadecyltrimethoxysilan, n-Octadecylmethyldimethoxysilan, n-Octadecylmethyldiethoxysilan, n-Octylmethyldiethoxysilan, Octyldimethylmethoxysilan, Pentyltriethoxysilan, Phenylmethyldimethoxysilan und Phenyltriethoxysilan.

Durch die Umsetzung mit dem Silan (S) sowie gegebenenfalls dem Silan (S2) wird die Oberfläche des eingesetzten Kieselsols (K) so modifiziert, dass die Verträglichkeit zwischen dem ursprünglich polaren Kieselsol und einem Polyol, insbesondere einem Polyesterol, verbessert wird. Durch Kombination von den verschiedenen Silanen, z.B. durch Kombination von reaktiven und unreaktiven Silanen, können bestimmte Effekte gezielt eingestellt werden. Es ist auch möglich, Gemische aus unterschiedlich modifizierten Siliciumdioxid-Partikeln einzusetzen.

Im Allgemeinen wird das Silan (S) (bzw. das Silan (S2)) in einer Menge von 0,1 bis 20 µmol pro m² Oberfläche von (K) eingesetzt.

Dies entspricht in der Regel einer Menge von 0,01 bis 5 mmol (S) pro Gramm (K), bevorzugt 0,05 bis 4 mmol (S) pro Gramm (K) und besonders bevorzugt 0,1 bis 3 mmol (S) pro Gramm (K).

Dazu erfolgt die Umsetzung mit (S) unter Rühren bei einer Temperatur von 10 bis 100 °C, bevorzugt von 20 bis 90, besonders bevorzugt von 30 bis 80 °C.

Unter diesen Reaktionsbedingungen lässt man 1 bis 48 Stunden, bevorzugt 3 bis 36 Stunden, besonders bevorzugt 4 bis 24 Stunden reagieren.

Das Silan (S) wird in Mengen von 0,1 bis 30 mol-% zugesetzt, bevorzugt sind 0,3 bis 25 und besonders bevorzugt 0,5 bis 20 mol-% bezogen auf den SiO₂-Gehalt.

Im Anschluss an die Oberflächenmodifizierung der Siliciumdioxid-Patikel mit dem Silan (S) kann In einem optionalen Schritt der pH-Wert der erfindungsgemäßen Siliciumdioxid-Dispersion gegebenenfalls auf einen Wert von 7 bis 12 eingestellt werden. Dies erfolgt durch Zugabe einer basischen Verbindung. Geeignete basische Verbindungen sind insbesondere stark basische Verbindungen wie Alkalihydroxide (NaOH, KOH, LiOH) und Alkalimetallalkoholate. Durch die Zugabe der basischen Verbindung kann die Reaktivität einer ebenfalls anwesenden Polyolkomponente erhöht werden. Dies wird darauf zurückgeführt, dass saure Silanolgruppen an der Oberfläche der Kieselsäurepartikel den Aminkatalysator adsorbieren können, wodurch die Reaktivität eines Polyurethansystems herabgesetzt wird. Dem kann durch Zugabe einer basischen Verbindung entgegengewirkt werden. Vorzugsweise wird dieser optionale Schritt der pH-Wert-Einstellung auf einen Wert von 7 bis 12 bei den erfindungsgemäßen Siliciumdioxid-Dispersion nicht durchgeführt.

Bevorzugt wird zu der erfindungsgemäßen Siliciumdioxid-Dispersion enthaltend Siliciumdioxid, das mit mindestens einem Silan (S) modifiziert ist, mindestens ein Polyol hinzugegeben. Polyole als solche sind dem Fachmann bekannt, beispielsweise Polyetherole, Polyesterole oder Polycarbonatpolyole. Vorzugsweise ist das Polyol ein Polyetherol und/oder ein Polyesterol, insbesondere mindestens ein Polyesterol. Siliciumdioxid-Dispersionen enthaltend i) mindestens einen Kettenverlängerer, ii) Siliciumdioxid, das mit mindestens einem Silan (S) modifiziert ist, das eine gegenüber Isocyanaten reaktive Gruppe enthält, und iii) mindestens ein Polyol, insbesondere mindestens ein Polyesterol, sind somit ein weiterer Gegenstand der vorliegenden Erfindung.

Geeignete Polyetherole weisen ein zahlenmittleres Molekulargewicht von 62 bis 10000 g/mol auf. Sie basieren auf Propylenoxid, Ethylenoxid oder Propylenoxid und Ethylenoxid.

Geeignete Polyetherole werden, ausgehend von einem Startermolekül, das 2 bis 6 reaktive Wasserstoffatome gebunden enthält, durch Polymerisation von Ethylenoxid und/oder Propylenoxid nach bekannten Verfahren hergestellt. Die Polymerisation kann als anionische Polymerisation mit Alkalihydroxiden oder Alkalialkoholaten als Katalysatoren, oder als kationische Polymerisation mit Lewis-Säuren, wie Antimonpentachlorid oder Borfluorid-Etherat durchgeführt werden. Weiter können als Katalysatoren auch Multimetallcyanidverbindungen, sogenannte DMC-Katalysatoren, eingesetzt werden. Auch tertiäre Amine können als Katalysator eingesetzt werden, z.B. Triethylamin, Tributylamine, Trimethylamine, Dimethylethanolamin oder Dimethylcyclohexylamin. Ethylenoxid und Propylenoxid können in Reinform, alternierend nacheinander, oder als Gemische polymerisiert werden.

Geeignete Startermoleküle mit 2 bis 6 reaktiven Wasserstoffatomen sind beispielsweise Wasser und 2- oder 3-wertige Alkohole, wie Ethylenglykol, 1,2- und 1,3-Propandiol, Diethylenglykol, Dipropylenglykol, 1,4-Butandiol, Glycerin, Trimethylolpropan, ferner Pentaerythritol, Sorbitol und Saccharose. Geeignete Startermoleküle sind weiterhin aminische Starter, wie Triethanolamine, Diethanolamine, Ethylendiamine und Toluendiamine.

Vorzugsweise weisen die Polyetherole eine OH-Zahl im Bereich von 10 bis 1825 auf.

Besonders bevorzugte Polyetherole sind ausgehend von 2- oder 3-wertigen Alkoholen, insbesondere Ethylenglykol, Trimethylolpropan oder Glycerin, hergestellt und sind Ethylenoxid-Homopolymere, Propylenoxid-Homopolymere oder Ethylenoxid/Propylenoxid-Copolymere. Eine weitere Klasse von bevorzugten Polyetherolen sind alpha-Hydro-omega-hydroxypoly(oxy-1,4-butandiyle), die auch unter der Bezeichnung PTHF bekannt sind. Diese besonders bevorzugten Polyetherole weisen ein Molekulargewicht von 62 bis 10000 g/mol und eine OH-Zahl von 10 bis 1825, bevorzugt von 15 bis 500, weiter bevorzugt von 20 bis 100, auf.

Geeignete Polyesterole sind dem Fachmann bekannt. Beispielsweise können Polyesterole eingesetzt werden wie Polycaprolactam oder Polyesterole, die durch Kondensation von mindestens einem mehrfach funktionellen Alkohol, vorzugsweise mindestens einem Diol, mit 2 bis 12 Kohlenstoffatomen, vorzugsweise 2 bis 6 Kohlenstoffatomen, mit mehrfach funktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Bernsteinsäure, Glutarsäure Decandicarbonsäure, Maleinsäure, Fumarsäure, Phthalsäure, Isophthalsäure, Terephthalsäure und die isomeren Naphthalindicarbonsäuren, hergestellt werden. Weiterhin können auch die entsprechenden Carbonsäureanhydride eingesetzt werden wie Phthalsäureanhydrid.

Bevorzugt wird das Polyesterol hergestellt durch Kondensation von
a) mindestens einem mehrfach funktionellen Alkohol, vorzugsweise einem Diol mit 2 bis 12 Kohlenstoffatomen, wobei das Diol gegebenenfalls zusätzlich mindestens ein Heteroatom, insbesondere mindestens eine Etherfunktion, aufweisen kann, und
b) mindestens einer mehrfach funktionellen Carbonsäure mit 2 bis 12 Kohlenstoffatomen oder einem Anhydrid davon.

Besonders bevorzugt wird das Polyesterol hergestellt durch Kondensation von
a) mindestens einem mehrfach funktionellen Alkohol ausgewählt aus 1,4-Butandiol, 3-Methyl-1,5-pentandiol, 1,6-Hexandiol, 1,5-Pentandiol, Diethylenglykol, 1,2-Propandiol, 2,2-Dimethylpropan-1,3-diol, 2-Methylpropan-1,3-diol, Trimethylolpropan, Glyzerin, Pentaerythrytol, 3-Methyl-1,5-pentandiol und Ethylenglykol, und
b) mindestens einer mehrfach funktionellen Carbonsäure mit 2 bis 12 Kohlenstoffatomen oder einem Anhydrid davon ausgewählt aus Adipinsäure, Phthalsäureanhydrid, Teraphthalsäure, Isophtalsäure, Sebazinsäure, Bernsteinsäure und Glutarsäure.

Es können auch Gemische aus mindestens einem Polyetherol und/oder mindestens einem Polyesterol eingesetzt werden.

Die Polyesterole weisen eine OH-Zahl von 15 bis 500, bevorzugt von 20 bis 200, auf.

Die erfindungsgemäß hergestellten Siliciumdioxid-Dispersionen umfassend Polyole wie Polyetherole oder Polyesterole können als Polyolkomponente zur Herstellung von Polyurethanen (PUs) eingesetzt werden. Das Einsatzgebiet der erfindungsgemäß hergestellten silikathaltigen Polyole ist sehr breit. Beispielsweise können sie verwendet werden zur Herstellung von kompaktem Polyurethan, wie z.B. Adhesiven, Beschichtung, Bindemittel, Einkapselungsmitteln, thermoplastischen Polyurethanen und Elastomeren. Weiterhin können sie verwendet werden zur Herstellung von mikrozellulärem Polyurethanschaum, zum Beispiel für Schuhanwendungen, Strukturschaum, Integralschaum und RIM-Polyurethanen, beispielsweise für Stoßstangen. Ferner können sie verwendet werden zur Herstellung von Hochdichteschäumen, z.B. von Halbhartschaum und Hinterteppichschaum, Niedrigdichteschäumen, wie z.B. von Weichschaum, Hartschaum, Thermoformschaum und Verpackungsschaum.

Weiterhin bevorzugt wird zu der erfindungsgemäßen Siliciumdioxid-Dispersion enthaltend Siliciumdioxid, das mit mindestens einem Silan (S) modifiziert ist, mindestens eine Isocyanat-haltige Verbindung hinzugegeben. Vorzugsweise erfolgt die Zugabe der Isocyanat-haltigen Verbindung nach der Zugabe von mindestens einem Polyol zur erfindungsgemäßen Siliciumdioxid-Dispersion. Gegebenenfalls kann die Zugabe der Isocyanat-haltigen Verbindung aber auch vor der Polyol-Zugabe erfolgen. Isocyanathaltige Verbindungen als solche sind dem Fachmann bekannt. Siliciumdioxid-Dispersionen enthaltend i) mindestens einen Kettenverlängerer, ii) Siliciumdioxid, das mit mindestens einem Silan (S) modifiziert ist, das eine gegenüber Isocyanaten reaktive Gruppe enthält, iii) gegebenenfalls mindestens ein Polyol, insbesondere mindestens ein Polyesterol, und iv) mindestens eine Isocyanat-haltige Verbindung, sind somit ein weiterer Gegenstand der vorliegenden Erfindung.

Isocyanat-haltige Verbindung umfassen Polyisocyanate auf Basis von Methandiphenyldiisocyanat (im Folgenden als MDI bezeichnet), Dicycolhexylmethandiisocyanat (im Folgenden als H12MDI bezeichnet) Toluoldiisocyanat, Isophorondiisocyanat, Naphthalindiisocyanat oder Hexamethylendiisocyanat. Unter MDI wird 2,4-MDI, 4,4'-MDI und höherkernige Homologe sowie Gemische daraus verstanden. Unter H12MDI wird 4,4'-H12MDI, 2,2'-H12MDI und 2,4'-H12MDI sowie Gemische daraus verstanden.

Das Polyisocyanat kann in Form von Polyisocyanatprepolymeren eingesetzt werden. Diese Polyisocyanatprepolymere sind erhältlich, indem vorstehend beschriebenes MDI, beispielsweise bei Temperaturen von 30 bis 100°C, bevorzugt bei etwa 80°C, mit Polyetherolen oder Polyesterolen oder poly-THF (pTHF) oder Gemischen daraus zum Prepolymer umgesetzt wird. Als Polyetherole oder Polyesterole werden vorzugsweise die vorstehend beschriebenen Polyetherole oder Polyesterole eingesetzt. Dabei können neben Polyisocyanatprepolymeren auf Polyetherbasis sowie Polyisocyanatprepolymeren auf Polyesterbasis auch deren Mischungen sowie Polyisocyanatprepolymere auf Basis von Polyethern und Polyestern eingesetzt werden. Der NCO-Gehalt der Prepolymere liegt dabei vorzugsweise z.B. für MDI-basierte Prepolymeren im Bereich von 2 % bis 30 %, besonders bevorzugt von 5 % bis 28% und insbesondere von 10 % bis 25 %. Geeignetes Polytetrahydrofuran (pTHF) weist im Allgemeinen ein Molekulargewicht von 550 bis 4000 g/mol, bevorzugt von 750 bis 2500 g/mol, besonders bevorzugt von 750 bis 1200 g/mol auf.

Vorzugsweise ist die Isocyanat-haltige Verbindung mindestens ein organisches Polyisocyanat, insbesondere ausgewählt aus Methandiphenyldiisocyanat (MDI), Dicycolhexylmethandiisocyanat (H12MDI), Toluoldiisocyanat, Isophorondiisocyanat, Naphthalindiisocyanat oder Hexamethylendiisocyanat.

Weitere Gegenstände der vorliegenden Erfindung sind somit auch i) ein Herstellungsverfahren der vorstehend beschriebenen erfindungsgemäßen Siliciumdioxid-Dispersion enthaltend Siliciumdioxid und Kettenverlängerer, ii) ein Herstellungsverfahren der vorstehend beschriebenen erfindungsgemäßen Siliciumdioxid-Dispersion enthaltend Siliciumdioxid, das mit mindestens einem Silan (S) modifiziert ist, das eine gegenüber Isocyanaten reaktive Gruppe enthält, und Kettenverlängerer, iii) ein Herstellungsverfahren der vorstehend beschriebenen erfindungsgemäßen Siliciumdioxid-Dispersion enthaltend Siliciumdioxid, das mit mindestens einem Silan (S) modifiziert ist, das eine gegenüber Isocyanaten reaktive Gruppe enthält, Kettenverlängerer und mindestens ein Polyol, insbesondere mindestens ein Polyesterol, iv) ein Herstellungsverfahren der vorstehend beschriebenen erfindungsgemäßen Siliciumdioxid-Dispersion enthaltend Siliciumdioxid, das mit mindestens einem Silan (S) modifiziert ist, das eine gegenüber Isocyanaten reaktive Gruppe enthält, Kettenverlängerer, gegebenenfalls mindestens ein Polyol, insbesondere mindestens ein Polyesterol, und mindestens eine Isocyanathaltige Verbindung.

Ein weiterer Gegenstand der vorliegenden Erfindung ist die Verwendung der jeweiligen vorstehend beschriebenen erfindungsgemäßen Siliciumdioxid-Dispersion zur Herstellung von Polyurethanwerkstoffen oder Polyurethan-Elastomeren. Besonders bevorzugt wird eine erfindungsgemäße Siliciumdioxid-Dispersion enthaltend Siliciumdioxid, das mit mindestens einem Silan (S) modifiziert ist, das eine gegenüber Isocyanaten reaktive Gruppe enthält, Kettenverlängerer, mindestens ein Polyol, insbesondere mindestens ein Polyesterol, und mindestens eine Isocyanat-haltige Verbindung verwendet.

Ein weiterer Gegenstand der vorliegenden Erfindung ist somit auch ein Polyurethan-Elastomer herstellbar durch Umsetzung von mindestens einer der vorstehend beschriebenen Siliciumdioxid-Dispersionen (gegebenenfalls zusätzlich) enthaltend mindestens ein Polyol und mindestens eine Isocyanat-haltige Verbindung. Vorzugsweise ist das erfindungsgemäße Polyurethan-Elastomer herstellbar unter Verwendung einer erfindungsgemäßen Siliciumdioxid-Dispersion enthaltend i) Siliciumdioxid, das mit mindestens einem Silan (S) modifiziert ist, das eine gegenüber Isocyanaten reaktive Gruppe enthält, ii) midestens ein Kettenverlängerer, iii) mindestens ein Polyol, insbesondere mindestens ein Polyesterol, und iv) mindestens eine Isocyanat-haltige Verbindung. Die Komponenten i) bis iv) sind bereits vorstehend beschrieben worden.

Verfahren zur Herstellung des erfindungsgemäßen Polyurethan-Elastomers sind dem Fachmann prinzipiell bekannt. Generell werden Polyurethan-Elastomere bzw. Polyurethanwerkstoffe hergestellt durch Umsetzung mindestens einer Isocyanat-haltigen Verbindung und mindestens einem Polyol, beispielsweise einem Polyetherol und/oder einem Polyesterol. Darüber hinaus können bei der Herstellung von Polyurethan-Elastomeren weitere Komponenten wie Treibmittel oder Quervernetzer bzw. Vernetzungsmittel verwendet werden.

Gegebenenfalls können Vernetzungsmittel eingesetzt werden. Dabei handelt es sich um Substanzen mit einem Molekulargewicht von kleiner 450 g/mol und 3 gegenüber Isocyanat reaktive Wasserstoffatome, beispielsweise um Triole, wie 1,2,4-, 1,3,5-Trihydroxycyclohexan, Glycerin und Trimethylolpropan oder niedermolekulare hydroxylgruppenhaltige Polyalkylenoxide auf Basis Ethylen- und/oder 1,2-Propylenoxid und den vorgenannten Triolen als Startermoleküle.

Gegebenenfalls sind bei der Herstellung von Polyurethan-Elastomeren, insbesondere bei Polyurethanschaumstoffen Treibmittel und/oder Wasser zugegen. Als Treibmittel können neben Wasser noch zusätzlich allgemein bekannte chemisch und/oder physikalisch Treibmittel eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. Als Treibmittel können auch feste Komponenten eingesetzt werden. Hier handelt es sich um z.B. expandierbaren Mikrospheren, wie z.B. Expansel® von der Firma AKZO, oder chemische Treibmittel wie Zitronensäure, Hydrogencarbonate oder Azocarbonamide.

Außerdem können zur Herstellung des erfindungsgemäßen Polyurethan-Elastomers Katalysatoren verwendet werden. Als Katalysatoren werden bevorzugt Verbindungen verwendet, welche die Reaktion des Polyols mit der Isocyanat-haltigen Verbindung stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin, Pentamethyldiethylentriamin, Tetramethyldiaminoethylether, Harnstoff, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyldiethanolamin und Dimethylethanolamin, N,N-Dimethylethanolamine, N,N-Dimethylcyclohexylamine, Bis(N,N-dimethylaminoethyl)ether, N,N,N',N',N"-Pentamethyldiethylenetriamine, 1,4-Diazabicyclo[2.2.2]octane, 2-(2-Dimethylaminoethoxy)ethanol, 2-((2-Dimethylaminoethoxy)ethylmethylamino)ethanol, 1-(Bis(3-dimethylamino)propyl)amino-2-propanol, N,N',N"Tris(3-dimethylaminopropyl)hexahydrotriazine, Dimorpholinodiethylether, N,N-Dimethylbenzylamin, N,N,N',N",N"-Pentamethyldipropylentriamin oder N,N'-Diethylpiperazin. Weiterhin können auch Alkylenpolyamine wie Trietylendiamin verwendet werden. Ebenso kommen in Betracht organische Metallverbindungen, vorzugsweise organische Zinnverbindungen, wie Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B. Dibutylzinndiacetat, Dibutylzinndilaurat, Dibutylzinnmaleat, Dibutylzinnmercaptid und Dioctylzinndiacetat, sowie Bismutcarboxylate, wie Bismut(III)-neodecanoat, Bismut-2-ethylhexanoat und Bismutoctanoat oder Mischungen davon, Titan(IV)chelat, Phenylquecksilberpropionat, Bleioctoat, Kaliumacetat/octoat, Quarternäre Ammoniumformiate und Eisenacetylacetonat. Die organischen Metallverbindungen können allein oder vorzugsweise in Kombination mit stark basischen Aminen eingesetzt werden. Weiterhin können die vorgenannten Katalysatoren in Kettenverlängerern wie 1,4-Butandiol oder Polyalkylenglykolen, wie z.B. Dipropyleneglykol und Diethylenglykol, vorgelegt werden.

Vorzugsweise verwendet werden 0,001 bis 5 Gew.-%, insbesondere 0,05 bis 2 Gew.-% Katalysator bzw. Katalysatorkombination, bezogen auf das Gewicht an Polyol, Kettenverlängerer, Siliciumdioxid und Isocyanat-haltiger Verbindung.

Der Reaktionsmischung zur Herstellung der Polyurethan-Elastomere können gegebenenfalls auch noch Hilfsmittel und/oder Zusatzstoffe zugegeben werden. Genannt seien beispielsweise oberflächenaktive Substanzen, Stabilisatoren wie Schaumstabilisatoren oder Hydrolysestabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Rizinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen bezogen auf das Gewicht an Polyol, Kettenverlängerer, Siliciumdioxid und Isocyanat-haltiger Verbindung

Die erfindungsgemäßen Polyurethan-Elastomere können nach dem one-shot- oder Prepolymer-Verfahren mit Hilfe der Niederdruck- oder Hochdrucktechnik hergestellt werden. Die Schäume können als Blockschaum oder als Formschaum hergestellt werden. Elastomere können in einem Gussverfahren hergestellt werden. TPUs können in einem Batch- bzw. Chargeverfahren, Bandverfahren oder einem reaktiven Extrusionsverfahren hergestellt werden. Diese Verfahrensweisen werden beispielsweise beschrieben in "The Polyurethanes Book" Randall and Lee, Eds, Wiley, 2002.

Vorzugsweise handelt es sich bei den erfindungsgemäßen Polyurethan-Elastomeren um thermoplastisches Polyurethan (TPU). TPUs als solche sind dem Fachmann bekannt. TPUs werden beispielsweise in der europäische Patentanmeldung PCT/EP 2010/058763 offenbart. So können die erfindungsgemäßen TPUs auch durch Reaktion mit einer weiteren Isocyanat-haltigen Verbindung in einer zweiten (weiteren PU-) Reaktionsstufe zusätzlich quervernetzt werden.

Artikel aus TPUs werden vorzugsweise hergestellt, indem man das (als Ausgangsmaterial eingesetzte) Polyurethan aufschmilzt und in einem Extruder oder in einem Spritzgussverfahren verarbeitet.

In einer bevorzugten Ausführungsform der vorliegenden Erfindung wird das Polyurethan-Elastomer hergestellt durch Umsetzung einer Siliciumdioxid-Dispersion herstellbar nach einem Verfahren umfassend die folgenden Schritte:
a) Versetzen eines wässrigen Kieselsols (K), das einen mittleren Partikeldurchmesser von 1 bis 150 nm, einen Gehalt an Siliciumdioxid von 1 bis 60 Gew.-% und einen pH-Wert von 1 bis 6 aufweist, mit mindestens einem Kettenverlängerer unter Erhalt eines Gemisches (A) aus wässrigem Kieselsol und Kettenverlängerer,
b) Entfernen des Wassers aus dem in Schritt (a) erhaltenen Gemisch (A).

Das in der Siliciumdioxid-Dispersion enthaltene Siliciumdioxid wird mit mindestens einem Silan (S) modifiziert, das eine gegenüber Isocyanaten reaktive Gruppe enthält. Das Silan (S) weist vorzugsweise eine mindestens einfach alkoxylierte Silylgruppe, einen Hydroxyl-haltigen Substituenten, einen Amino-haltigen Substituenten, und/oder einen Alkyl-, Cycloalkyl- oder Arylsubstituenten auf.

In der Siliciumdioxid-Dispersion sind weiterhin mindestens ein Polyesterol und mindestens eine Isocyanat-haltigen Verbindung enthalten. Das Polyesterol wird vorzugsweise hergestellt durch Kondensation von
a) mindestens einem mehrfach funktionellen Alkohol, vorzugsweise einem Diol mit 2 bis 12 Kohlenstoffatomen, wobei das Diol gegebenenfalls zusätzlich mindestens ein Heteroatom, insbesondere mindestens eine Etherfunktion, aufweisen kann, und
b) mindestens einer mehrfach funktionellen Carbonsäure mit 2 bis 12 Kohlenstoffatomen oder einem Anhydrid davon.

Die Isocyanat-haltige Verbindung ist ausgewählt aus Methandiphenyldiisocyanat (MDI), Dicycolhexylmethandiisocyanat (H12MDI), Toluoldiisocyanat, Isophorondiisocyanat, Naphthalindiisocyanat oder Hexamethylendiisocyanat.

In einer weiteren bevorzugten Ausführungsform der vorliegenden Erfindung wird das Polyurethan-Elastomer hergestellt durch Umsetzung einer Siliciumdioxid-Dispersion herstellbar nach einem Verfahren umfassend die folgenden Schritte:
a) Versetzen eines wässrigen Kieselsols (K), das einen mittleren Partikeldurchmesser von 1 bis 150 nm, einen Gehalt an Siliciumdioxid von 1 bis 60 Gew.-% und einen pH-Wert von 1 bis 6 aufweist, mit mindestens einem Kettenverlängerer unter Erhalt eines Gemisches (A) aus wässrigem Kieselsol und Kettenverlängerer,
b) Entfernen des Wassers aus dem in Schritt (a) erhaltenen Gemisch (A).

Das in der Siliciumdioxid-Dispersion enthaltene Siliciumdioxid wird mit mindestens einem Silan (S) modifiziert, das eine gegenüber Isocyanaten reaktive Gruppe enthält und das hergestellt wird durch Umsetzung von i) einem Trialkoxysilan, das mit einer Epoxyalkylgruppe substituiert ist, und ii) einem Polyetheramin, besonders bevorzugt sind dabei die Verbindung i) 3-Glycidoxypropyltrimethoxysilan und die Verbindung ii) ein monofunktionelles Polyetheramin mit einem Molekulargewicht von 500 bis 2500.

In der Siliciumdioxid-Dispersion sind weiterhin mindestens ein Polyesterol und mindestens eine Isocyanat-haltigen Verbindung enthalten. Das Polyesterol wird vorzugsweise hergestellt durch Kondensation von
a) mindestens einem mehrfach funktionellen Alkohol, vorzugsweise einem Diol mit 2 bis 12 Kohlenstoffatomen, wobei das Diol gegebenenfalls zusätzlich mindestens ein Heteroatom, insbesondere mindestens eine Etherfunktion, aufweisen kann, und
b) mindestens einer mehrfach funktionellen Carbonsäure mit 2 bis 12 Kohlenstoffatomen oder einem Anhydrid davon.

Die Isocyanat-haltige Verbindung ist ausgewählt aus Methandiphenyldiisocyanat (MDI), Dicycolhexylmethandiisocyanat (H12MDI), Toluoldiisocyanat, Isophorondiisocyanat, Naphthalindiisocyanat oder Hexamethylendiisocyanat.

Ein weiterer Gegenstand der vorliegenden Erfindung ist die Verwendung eines der vorstehend beschriebenen Polyurethan-Elastomeren zur Herstellung von Formkörpern in einem Guss-, Spritzguss-, Kalendrierungs-, Pulversinterungs- oder Extrusionsverfahren. Bei den Formkörpern handelt es sich vorzugsweise um Rollen, Schuhsohlen, Verkleidungen in Automobilen, Siebe, Räder, Reifen, Transportbänder, Bauteile für Engineering, Schläuche, Beschichtungen, Kabel, Profile, Laminate, Steckverbindungen, Kabelstecker, Faltenbälge, Schleppkabel, Abstreifer, Dichtlippen, Kabelummantelungen, Dichtungen, Riemen ,Dämpfungselemente, Folien oder Fasern. Weitere Beispiele für Anwendungen von Elastomeren werden beispielsweise in "The polyurethanes book", Randall and Lee, Eds., Wiley 2002 beschrieben.

Ein weiterer Gegenstand der vorliegenden Erfindung ist ein Polymerblend oder eine Mischung enthaltend mindestens eines der vorstehend beschriebenen thermoplastischen Polyurethane und zusätzlich mindestens ein anderes Polymer. Anderes Polymer bedeutet, dass dieses Polymer nicht unter die Definitionen der erfindungsgemäßen thermoplastischen Polyurethane fällt. Vorzugsweise ist das andere Polymer ein thermoplastisches Polyurethan, einen Polyester, Polyether oder ein Polyamid. Insbesondere liegt das andere Polymer in einer Menge von insgesamt 5 bis 40 %, bezogen auf das erfindungsgemäße thermoplastischen Polyurethane, vor.

Ein weiterer Gegenstand der vorliegenden Erfindung sind Folien, Spritzgussartikel oder Extrusionsartikel enthaltend mindestens ein erfindungsgemäßes thermoplastisches Polyurethan.

Die Erfindung wird nachfolgend anhand der Beispiele verdeutlicht.

### Beispiele

**Tabelle 1**

| **Kurzbezeichnung** | **Zusammensetzung** |
|---|---|
| ISO-1 | Lupranat® ME; 4,4'-MDI; BASF SE; Ludwigshafen; Deutschland |
| ISO-2 | Lupranat® MP102; Prepolymer aus 4,4'-MDI und einem Glykolgemisch; NCO-Gehalt 22,9%; BASF SE; Ludwigshafen; Deutschland |
| ISO-3 | Lupranat® MM103; 4,4'-MDI, carbodiimidmodifiziert; NCO-Gehalt 29,5%; BASF SE; Ludwigshafen; Deutschland |
| Polyesterol 1 | Polyesterdiol (Butandiol-Adipinsäure) mit einem zahlenmittleren Molekulargewicht (Mn) von 1000 g/mol |
| Polyesterol 2 | Polyesterdiol (Ethylenglykol-Butandiol-Adipinsäure) mit einem zahlenmittleren Molekulargewicht (Mn) von 2000 g/mol |
| Katalysator 1 | Titan(IV)chelat-Katalysator in 1,4-Butandiol |
| Katalysator 2 | Zink- und Bismuthneodecanoat in Polypropylenglykol (2000 g/mol) |
| Katalysator 3 | Triethylendiamin in Dipropylenglykol |
| Stabilisator 1 | Gemisch aus Polyethersiloxan und Silikonöl |

### A Transfer von nicht modifizierten Siliciumdioxid-Nanopartikeln in Kettenverlängerer und Herstellung von stabilen Siliciumdioxid-Dispersionen

### Beispiel A1:

Zu 500 g eines kommerziell erhältlichen sauren Kieselsols (Levasil® 200E/20% .von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) werden 233 g 1,4-Butandiol hinzugegeben. Das Wasser wird bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C beträgt. Es wird eine stabile, transparente Siliciumdioxid-Dispersion in 1,4-Butandiol mit einer Siliciumdioxid-Konzentration von 30 Gew.-% erhalten.

### Beispiel A2:

Zu 500 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) werden 150 g Monoethylenglykol hinzugegeben. Das Wasser wird bei vermindertem Druck und schrittweise von 30 °C bis 75 °C ansteigender Temperatur über einen Zeitraum von 6 Stunden entfernt, wobei in den letzten 1 bis 2 Stunden die Temperatur 75 °C beträgt. Es wird eine stabile, transparente Siliciumdioxid-Dispersion in Monoethylenglykol mit einer Siliciumdioxid-Konzentration von 40 Gew.-% erhalten.

### B Oberflächenmodifizierung von Siliciumdioxid-Nanopartikeln in Kettenverlängerern

Die Siliciumdioxidkonzentration der Dispersion nach Oberflächenmodifizierung bezieht sich auf reines Siliciumdioxid.

### Beispiel B1:

In einem mit einem Rührer ausgestatteten 1L-Glaskolben werden 333 g der Siliciumdioxid-Dispersion in 1,4-Butandiol aus Beispiel A1 mit einer Siliciumdioxid-Konzentration von 30 Gew.-% und 58,8 g (0,27 mol) 3-Aminopropyltriethoxysilan (von Merck Schuchardt OHG, Hohenbrunn, Deutschland) gemischt. Das erhaltene Gemisch wird 24 Stunden lang bei 70 °C gerührt. Bei verringertem Druck bei 75 °C werden flüchtige Bestandteile während eines Zeitraumes von 2 Stunden abdestilliert. Es wird eine stabile, transparente Siliciumdioxid-Dispersion in 1,4-Butandiol mit einer Siliciumdioxid-Konzentration von 28,1 Gew.-% erhalten.
Theoretische OH-Zahl der Dispersion: 817,2 mg KOH/g, gemessen: 810 mg KOH/g Theoretische Amin-Zahl der Dispersion: 41,9 mg KOH/g, gemessen: 40 mg KOH/g Für alle weiteren Berechnungen werden die theoretischen Werte der Dispersionen verwendet.
Das gewonnene Gemisch wird im weiteren Verlauf als Dispersion 1 bezeichnet.

### Beispiel B2:

In einem mit einem Rührer ausgestatteten 1 L-Glaskolben werden 333 g der Siliciumdioxid-Dispersion in 1,4-Butandiol aus Beispiel A1 mit einer Siliciumdioxid-Konzentration von 30 Gew.-% und 29,4 g (0,13 mol) 3-Aminopropyltriethoxysilan (von Merck Schuchardt OHG, Hohenbrunn, Deutschland) gemischt. Das erhaltene Gemisch wird 24 Stunden lang bei 70 °C gerührt. Bei verringertem Druck bei 75 °C werden flüchtige Bestandteile während eines Zeitraumes von 2 Stunden abdestilliert. Es wird eine stabile, transparente Siliciumdioxid-Dispersion in 1,4-Butandiol mit einer Siliciumdioxid-Konzentration von 29,0 Gew.-% erhalten.
Das gewonnene Gemisch wird im weiteren Verlauf als Dispersion 2 bezeichnet.

### Beispiel B3:

In einem mit einem Rührer ausgestatteten 1 L-Glaskolben werden 250 g der Siliciumdioxid-Dispersion in Monoethylenglykol aus Beispiel A2 mit einer Siliciumdioxid-Konzentration von 40 Gew.-%, 83 g Monoethylenglykol und 29,4 g (0,13 mol) 3-Aminopropyltriethoxysilan (von Merck Schuchardt OHG, Hohenbrunn, Deutschland) gemischt. Das erhaltene Gemisch wird 24 Stunden lang bei 70 °C gerührt. Bei verringertem Druck bei 75 °C werden flüchtige Bestandteile während eines Zeitraumes von 2 Stunden abdestilliert. Es wird eine stabile, transparente Siliciumdioxid-Dispersion in Monoethylenglykol mit einer Siliciumdioxid-Konzentration von 29,0 Gew.-% erhalten.

### Beispiel B4:

In einem mit einem Rührer ausgestatteten 1L-Glaskolben werden 333,33 g der Siliciumdioxid-Dispersion in 1,4-Butandiol aus Beispiel A1 mit einer Siliciumdioxid-Konzentration von 30 Gew.-%, 166,67 g 1,4-Butandiol und 74,27 g (33,2 mmol) des Produktes aus der Reaktion von 23,63 g 3-Glycidoxypropyltrimethoxysilan (von Sigma-Aldrich Chemie GmbH, Steinheim, Deutschland) mit 200 g Jeffamine® M-2070 (von Huntsman Performance Chemicals, Everberg, Belgien) (Gemisch der beiden Komponenten für 12 h bei 50 °C gerührt) gemischt. Das erhaltene Gemisch wird 24 Stunden lang bei 70 °C gerührt. Bei verringertem Druck bei 75 °C werden flüchtige Bestandteile während eines Zeitraumes von 2 Stunden abdestilliert. Es wird eine stabile, transparente Siliciumdioxid-Dispersion in 1,4-Butandiol mit einer Siliciumdioxid-Konzentration von 18,8 Gew.-% erhalten.
Das gewonnene Gemisch wird im weiteren Verlauf als Dispersion 3 bezeichnet.

### C Vergleichsbeispiele

### Beispiel C1:

100 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) werden mit jeweils 100 g Polyesterol 1 und 2 bei Raumtemperatur und 60 °C gemischt. Es wird jedes Mal sofort ein gelartiges Produkt erhalten.

### Beispiel C2:

100 g eines kommerziell erhältlichen sauren Kieselsols (Levasil® 200E/20% von H.C. Starck GmbH & Co KG, Leverkusen, Deutschland, Teilchendurchmesser basierend auf der BET-Methode: 15 nm, pH 2,5, Siliciumdioxid-Konzentration: 20 Gew.-%) werden mit 100 g Isopropanol bei 60 °C gemischt. Man erhält eine klare, stabile Siliciumdioxid-Dispersion. Jeweils 50 g Polyesterol 1 und 2 werden bei 60 °C mit jeweils 50 g Isopropanol gemischt. Alle erhaltenen Lösungen sind klar und stabil. Beim Mischen des reinen Kieselsols oder der Siliciumdioxid-Dispersion mit 50 % Isopropanol mit reinem Polyesterol 1 oder 2 oder mit einer der erhaltenen Lösungen aus Polyesterol und Isopropanol bei 60 °C oder Raumtemperatur, wird in allen Fällen sofort ein trübes und gelartiges Produkt erhalten.

### Beispiel C3:

In einem mit einem Rührer ausgestattetem 1L-Glaskolben werden 333 g der Siliciumdioxid-Dispersion in 1,4-Butandiol aus Beispiel A1 mit einer Siliciumdioxid-Konzentration von 30 Gew.-%, 7,2 g (0,40 mol) Wasser und 29,4 g (0,13 mol) 3-Aminopropyltriethoxysilan (von Merck Schuchardt OHG, Hohenbrunn, Deutschland) gemischt. Das erhaltene Gemisch wird bei 70 °C gerührt. Nach kurzer Zeit wird ein trübes Produkt erhalten, welches beim Abdestillieren gelartig wird.

Aus den Beispielen C1 und C2 geht hervor, dass wässrige Kieselsole nicht direkt oder mit Hilfe von organischen Lösungsmitteln in Polyole, insbesondere in Polyesterole eingebracht werden können. Beispiel C3 zeigt, dass eine Silanisierung mit 3-Aminopropyltriethoxysilan nur in einem weitestgehend wasserfreien Medium möglich ist.

### D Polyurethan-Herstellung

### Beispiel D1 (Vergleich):

In einem 2 L Weißblecheimer werden 940,0 g Polyesterol 1 und 83,68 g 1,4-Butandiol auf 90 °C aufgeheizt. Anschließend werden unter Rühren 7,52 g Hydrolysestabilisator (Carbodiimid) zugegeben. Nach anschließender Erwärmung der Lösung auf 80 °C werden 470,0 g ISO-1 zugegeben und solange gerührt, bis die Temperatur 110 °C beträgt. Anschließend wird die Reaktionsmasse in eine flache Schale gegossen und bei 125 °C auf einer Heizplatte 10 min getempert. Danach wird die entstandene Schwarte in einem Heizschrank 15 h bei 80 °C getempert. Die Schwarte wird in einer Mühle zerkleinert und das Material wird anschließend zu Spritzplatten (Dimension der Spritzplatten 110 mm x 25 mm x 2 mm) verarbeitet. Die Testplatten werden 20 Stunden bei 100 °C getempert und deren mechanische Eigenschaften bestimmt.

### Beispiel D2:

In einem 2 L Weißblecheimer werden 940,0 g Polyesterol 1, 74,65 g 1,4-Butandiol und 13,01 g von Dispersion 2 (0,25 % SiO₂ bezogen auf die Gesamtmasse) auf 90 °C aufgeheizt. Anschließend werden unter Rühren 7,52 g Hydrolysestabilisator (Carbodiimid) zugegeben. Nach anschließender Erwärmung der Lösung auf 80 °C werden 470,0 g ISO-1 zugegeben und solange gerührt, bis die Temperatur 110 °C beträgt. Anschließend wird die Reaktionsmasse in eine flache Schale gegossen und bei 125 °C auf einer Heizplatte 10 min getempert. Danach wird die entstandene Schwarte in einem Heizschrank 15 h bei 80 °C getempert. Die Schwarte wird in einer Mühle zerkleinert und das Material wird anschließend zu Spritzplatten (Dimension der Spritzplatten 110 mm x 25 mm x 2 mm) verarbeitet. Die Testplatten werden 20 Stunden bei 100 °C getempert und deren mechanische Eigenschaften bestimmt.

### Beispiel D3 :

In einem 2 L Weißblecheimerwerden 940,0 g Polyesterol 1, 74,39 g 1,4-Butandiol und 13,46 g von Dispersion 1 (0,25 % SiO₂ bezogen auf die Gesamtmasse) auf 90 °C aufgeheizt. Anschließend werden unter Rühren 7,52 g Hydrolysestabilisator (Carbodiimid) zugegeben. Nach anschließender Erwärmung der Lösung auf 80 °C werden 470,0 g ISO-1 zugegeben und solange gerührt, bis die Temperatur 110 °C beträgt. Anschließend wird die Reaktionsmasse in eine flache Schale gegossen und bei 125 °C auf einer Heizplatte 10 min getempert. Danach wird die entstandene Schwarte in einem Heizschrank 15 h bei 80 °C getempert. Die Schwarte wird in einer Mühle zerkleinert und das Material wird anschließend zu Spritzplatten (Dimension der Spritzplatten 110 mm x 25 mm x 2 mm) verarbeitet. Die Testplatten werden 20 Stunden bei 100 °C getempert und deren mechanische Eigenschaften bestimmt.

### Beispiel D4 :

In einem 2 L Weißblecheimer werden 940,0 g Polyesterol 1, 47,28 g 1,4-Butandiol und 52,39 g von Dispersion 2 (1 % SiO₂ bezogen auf die Gesamtmasse) auf 90 °C aufgeheizt. Anschließend werden unter Rühren 7,52 g Hydrolysestabilisator (Carbodiimid) zugegeben. Nach anschließender Erwärmung der Lösung auf 80 °C werden 470,0 g ISO-1 zugegeben und solange gerührt, bis die Temperatur 110 °C beträgt. Anschließend wird die Reaktionsmasse in eine flache Schale gegossen und bei 125 °C auf einer Heizplatte 10 min getempert. Danach wird die entstandene Schwarte in einem Heizschrank 15 h bei 80 °C getempert. Die Schwarte wird in einer Mühle zerkleinert und das Material wird anschließend zu Spritzplatten (Dimension der Spritzplatten 110 mm x 25 mm x 2 mm) verarbeitet. Die Testplatten werden 20 Stunden bei 100 °C getempert und deren mechanische Eigenschaften bestimmt.

### Beispiel D5:

In einem 2 L Weißblecheimer werden 940,0 g Polyesterol 1, 46,03 g 1,4-Butandiol und 54,58 g von Dispersion 1 (1 % SiO₂ bezogen auf die Gesamtmasse) auf 90 °C aufgeheizt. Anschließend werden unter Rühren 7,52 g Hydrolysestabilisator (Carbodiimid) zugegeben. Nach anschließender Erwärmung der Lösung auf 80 °C werden 470,0 g ISO-1 zugegeben und solange gerührt, bis die Temperatur 110 °C beträgt. Anschließend wird die Reaktionsmasse in eine flache Schale gegossen und bei 125 °C auf einer Heizplatte 10 min getempert. Danach wird die entstandene Schwarte in einem Heizschrank 15 h bei 80 °C getempert. Die Schwarte wird in einer Mühle zerkleinert und das Material wird anschließend zu Spritzplatten (Dimension der Spritzplatten 110 mm x 25 mm x 2 mm) verarbeitet. Die Testplatten lassen sich noch verarbeiten, sind aber leicht trüb. Dies zeigt, dass der maximal nutzbare Anteil von modifizierten Siliciumdioxid-Nanopartikeln erreicht ist. Die Testplatten werden 20 Stunden bei 100 °C getempert und deren mechanische Eigenschaften bestimmt.

Es werden die aus Tabelle 2 ersichtlichen Eigenschaften bestimmt:

**Tabelle 2**

| **Eigenschaft** | **Einheit** | **Prüfvorschrift** | **Beispiel D1 (Vergleich)** | **Beispiel D2** | **Beispiel D3** | **Beispiel D4** | **Beispiel D5** |
|---|---|---|---|---|---|---|---|
| **Dichte** | g/cm³ | DIN EN ISO 1183-1, A | 1,202 | 1,206 | 1,204 | 1,208 | 1,207 |
| **Shore-Härte A** | - | DIN 53 505 | 85 | 83 | 83 | 84 | 82 |
| **Abrieb** | mm³ | DIN ISO 4649 | 31 | 38 | 27 | 33 | 38 |
| **Vicat-Erweichungstemperatur (Verfahren A 120: 10N; 120°C/h)** | °C | DIN EN ISO 306 | 106,5 | 114,2 | 118,4 | 117,4 | 125,1 |
| **DVR 72h/23°C/30 min** | % | DIN ISO 815 | 25 | 20 | 22 | 21 | 21 |
| **DVR 24h/70°C/30 min** | % | DIN ISO 815 | 42 | 34 | 32 | 29 | 29 |
| **DVR 24h/100°C/30 min** | % | DIN ISO 815 | 59 | 50 | 43 | 49 | 45 |
| **TMA** | °C | ISO 11359-3 | 144 | 175 | 195 | 196 | 211 |

Die Ergebnisse der erfindungsgemäßen Beispiele zeigen eine signifikante Erhöhung der Vicat-Erweichungstemperatur und der Maximaltemperatur der thermisch mechanischen Analyse (TMA) und eine deutliche Absenkung des Druckverformungsrestes.

### Beispiel D6 (Vergleich):

106,8 g Polyesterol 2; 4,0 g K-Ca-Na-Zeolite A (50 % in Rizinusöl); 0,91 g Stabilisator 1; 0,17 g Katalysator 1; 0,06 g Katalysator 2; 0,03 g Katalysator 3 und 13,8 g 1,4-Butandiol wurden auf 40 °C temperiert und in einem Speedmixer homogenisiert. Die Komponente wurde mit einem auf 40 °C temperierten Gemisch aus 63,1 g ISO-2 und 11,1 g ISO-3 versetzt und mit dem Speedmixer 1 min lang gemischt. Das so erhaltene Reaktionsgemisch wurde in eine unbeheizte offene Form der Abmessung 300 mm x 200 mm x 2 mm gegossen und über Nacht ausreagieren lassen. Die Prozedur wurde zweimal wiederholt, um zwei weitere Formen der Abmessungen 200 mm x 150 mm x 4 mm und 200 mm x 150 mm x 6 mm zu füllen. Am nächsten Tag wurden die drei Platten entformt und für 2 h bei 80 °C getempert. Aus den Platten wurden geeignete Prüfkörper herausgestanzt, um deren mechanische Eigenschaften zu bestimmen.

### Beispiel D7:

106,8 g Polyesterol 2; 4,0 g K-Ca-Na-Zeolite A (50 % in Rizinusöl); 0,91 g Stabilisator 1; 0,17 g Katalysator 1; 0,06 g Katalysator 2; 0,03 g Katalysator 3; 12,7 g 1,4-Butandiol und 1,7 g Dispersion 1 wurden auf 40 °C temperiert und in einem Speedmixer homogenisiert. Die Komponente wurde mit einem auf 40 °C temperierten Gemisch aus 63,1 g ISO-2 und 11,1 g ISO-3 versetzt und mit dem Speedmixer 1 min lang gemischt. Das so erhaltene Reaktionsgemisch wurde in eine unbeheizte offene Form der Abmessung 300 mm x 200 mm x 2 mm gegossen und über Nacht ausreagieren lassen. Die Prozedur wurde zweimal wiederholt, um zwei weitere Formen der Abmessungen 200 mm x 150 mm x 4 mm und 200 mm x 150 mm x 6 mm zu füllen. Am nächsten Tag wurden die drei Platten entformt und für 2 h bei 80 °C getempert. Aus den Platten wurden geeignete Prüfkörper herausgestanzt, um deren mechanische Eigenschaften zu bestimmen.

### Beispiel D8:

106,8 g Polyesterol 2; 4,0 g K-Ca-Na-Zeolite A (50 % in Rizinusöl); 0,91 g Stabilisator 1; 0,17 g Katalysator 1; 0,06 g Katalysator 2; 0,03 g Katalysator 3; 9,2 g 1,4-Butandiol und 6,7 g Dispersion 1 wurden auf 40 °C temperiert und in einem Speedmixer homogenisiert. Die Komponente wurde mit einem auf 40 °C temperierten Gemisch aus 63,1 g ISO-2 und 11,1 g ISO-3 versetzt und mit dem Speedmixer 1 min lang gemischt. Das so erhaltene Reaktionsgemisch wurde in eine unbeheizte offene Form der Abmessung 300 mm x 200 mm x 2 mm gegossen und über Nacht ausreagieren lassen. Die Prozedur wurde zweimal wiederholt, um zwei weitere Formen der Abmessungen 200 mm x 150 mm x 4 mm und 200 mm x 150 mm x 6 mm zu füllen. Am nächsten Tag wurden die drei Platten entformt und für 2 h bei 80 °C getempert. Aus den Platten wurden geeignete Prüfkörper herausgestanzt, um deren mechanische Eigenschaften zu bestimmen.

### Beispiel D9:

106,8 g Polyesterol 2; 4,0 g K-Ca-Na-Zeolite A (50 % in Rizinusöl); 0,91 g Stabilisator 1; 0,17 g Katalysator 1; 0,06 g Katalysator 2; 0,03 g Katalysator 3; 11,9 g 1,4-Butandiol und 2,5 g Dispersion 3 wurden auf 40 °C temperiert und in einem Speedmixer homogenisiert. Die Komponente wurde mit einem auf 40 °C temperierten Gemisch aus 63,1 g ISO-2 und 11,1 g ISO-3 versetzt und mit dem Speedmixer 1 min lang gemischt. Das so erhaltene Reaktionsgemisch wurde in eine unbeheizte offene Form der Abmessung 300 mm x 200 mm x 2 mm gegossen und über Nacht ausreagieren lassen. Die Prozedur wurde zweimal wiederholt, um zwei weitere Formen der Abmessungen 200 mm x 150 mm x 4 mm und 200 mm x 150 mm x 6 mm zu füllen. Am nächsten Tag wurden die drei Platten entformt und für 2 h bei 80 °C getempert. Aus den Platten wurden geeignete Prüfkörper herausgestanzt, um deren mechanische Eigenschaften zu bestimmen.

Es werden die aus Tabelle 3 ersichtlichen Eigenschaften bestimmt:

**Tabelle 3**

| **Eigenschaft** | **Einheit** | **Prüfvorschrift** | **Beispiel D6 (Vergleich)** | **Beispiel D7** | **Beispiel D8** | **Beispiel D9** |
|---|---|---|---|---|---|---|
| **Dichte** | g/cm³ | DIN EN ISO 1183-1, A | 1,220 | 1,219 | 1,220 | 1,222 |
| **Shore-Härte A** | - | DIN 53 505 | 87 | 87 | 88 | 90 |
| **Zugfestigkeit** | MPa | DIN EN ISO 527 | 10 | 12 | 12 | 40 |
| **Reißdehnung** | % | DIN EN ISO 527 | 400 | 410 | 370 | 500 |
| **Spannung 100 % Dehnung** | MPa | DIN EN ISO 527 | 5,5 | 6,2 | 6,2 | Nicht gemessen |
| **Spannung 200 % Dehnung** | MPa | DIN EN ISO 527 | 6,9 | 7,9 | 8,1 | Nicht gemessen |
| **Spannung 300 % Dehnung** | MPa | DIN EN ISO 527 | 8,5 | 9,7 | 10,2 | Nicht gemessen |
| **Weiterreißwiderstand** | kN/m | DIN ISO 34-1, B (b) | 40 | 43 | 43 | 51 |
| **Abrieb** | mm³ | DIN ISO 4649 | 110 | 94 | 73 | 65 |
| **Vicat-Erweichungstemp eratur (Verfahren A 120: 10N; 120°C/h)** | °C | DIN EN ISO 306 | 73,2 | 91,3 | 87,1 | 107,7 |
| **DVR 72h/23°C/30 min** | % | DIN ISO 815 | 30 | 20 | 24 | 24 |
| **DVR 24h/70°C/30 min** | % | DIN ISO 815 | 65 | 50 | 55 | 55 |

Die Ergebnisse der erfindungsgemäßen Beispiele zeigen eine signifikante Erhöhung der Vicat-Erweichungstemperatur, der Spannungswerte bei verschiedenen Dehnungen sowie eine deutliche Absenkung des Druckverformungsrestes und des Abriebs.

## Patentansprüche

1. Siliciumdioxid-Dispersion, herstellbar nach einem Verfahren umfassend die folgenden Schritte:
a) Versetzen eines wässrigen Kieselsols (K), das einen mittleren Partikeldurchmesser von 1 bis 150 nm, einen Gehalt an Siliciumdioxid von 1 bis 60 Gew.-% und einen pH-Wert von 1 bis 6 aufweist, mit mindestens einem Kettenverlängerer unter Erhalt eines Gemisches (A) aus wässrigem Kieselsol und Kettenverlängerer,
b) Entfernen des Wassers aus dem in Schritt (a) erhaltenen Gemisch (A),
**dadurch gekennzeichnet, dass** das in der Siliciumdioxid-Dispersion enthaltene Siliciumdioxid mit mindestens einem Silan (S) modifiziert wird, das eine gegenüber Isocyanaten reaktive Gruppe enthält und dass zu der Siliciumdioxid-Dispersion mindestens ein Polyol hinzugegeben wird.

2. Siliciumdioxid-Dispersion gemäß Anspruch 1, **dadurch gekennzeichnet, dass** in Schritt (b) das Wasser vollständig oder bis zu einer Restmenge von weniger als 0,5 Gew.-% (bezogen auf die Siliciumdioxid-Dispersion) entfernt wird und/oder das Wasser bei schrittweise ansteigender Temperatur in einem Bereich von 30°C bis 75 °C entfernt wird.

3. Siliciumdioxid-Dispersion gemäß Anspruch 1 oder 2, **dadurch gekennzeichnet, dass** der Kettenverlängerer ausgewählt ist aus einem Diol mit einem Molekulargewicht von kleiner als 300 g/mol, insbesondere aus 1,4-Butandiol und Monoethylenglykol.

4. Siliciumdioxid-Dispersion gemäß Anspruch 1, **dadurch gekennzeichnet, dass** das Silan (S) eine mindestens einfach alkoxylierte Silylgruppe, einen Hydroxyl-haltigen Substituenten, einen Amino-haltigen Substituenten, und/oder einen Alkyl-, Cycloalkyl- oder Arylsubstituenten aufweist.

5. Siliciumdioxid-Dispersion gemäß Anspruch 1 oder 4, **dadurch gekennzeichnet, dass** ein Silan (S) eingesetzt wird, das hergestellt wird durch Umsetzung von i) einem Trialkoxysilan, das mit einer Epoxyalkylgruppe substituiert ist, und ii) einem Polyetheramin.

6. Siliciumdioxid-Dispersion gemäß Anspruch 5, **dadurch gekennzeichnet, dass** die Verbindung i) 3-Glycidoxypropyltrimethoxysilan und die Verbindung ii) ein monofunktionelles Polyetheramin mit einem Molekulargewicht von 500 bis 2500 sind.

7. Siliciumdioxid-Dispersion gemäß Anspruch 1, **dadurch gekennzeichnet, dass** das Polyol ein Polyesterol ist.

8. Siliciumdioxid-Dispersion gemäß Anspruch 7, **dadurch gekennzeichnet, dass** das Polyesterol hergestellt wird durch Kondensation von
a) mindestens einem mehrfach funktionellen Alkohol, vorzugsweise einem Diol mit 2 bis 12 Kohlenstoffatomen, wobei das Diol gegebenenfalls zusätzlich mindestens ein Heteroatom, insbesondere mindestens eine Etherfunktion, aufweisen kann, und
b) mindestens einer mehrfach funktionellen Carbonsäure mit 2 bis 12 Kohlenstoffatomen oder einem Anhydrid davon.

9. Siliciumdioxid-Dispersion gemäß einem der Ansprüche 1 bis 8, **dadurch gekennzeichnet, dass** zu der Siliciumdioxid-Dispersion enthaltend Siliciumdioxid, das mit mindestens einem Silan (S) modifiziert ist, mindestens eine Isocyanat-haltige Verbindung hinzugegeben wird.

10. Siliciumdioxid-Dispersion gemäß Anspruch 9, **dadurch gekennzeichnet, dass** die Isocyanat-haltige Verbindung ein organisches Polyisocyanat ist, ausgewählt aus Methandiphenyldiisocyanat (MDI), Dicycolhexylmethandiisocyanat (H12MDI), Toluoldiisocyanat, Isophorondiisocyanat, Naphthalindiisocyanat oder Hexamethylendiisocyanat.

11. Polyurethan-Elastomer herstellbar durch Umsetzung von mindestens einer Siliciumdioxid-Dispersion gemäß einem der Ansprüche 1 bis 6 zusätzlich enthaltend mindestens ein Polyol und mindestens eine Isocyanat-haltige Verbindung.

12. Polyurethan-Elastomer gemäß Anspruch 11, **dadurch gekennzeichnet, dass** es sich um ein thermoplastisches Polyurethan (TPU) handelt.

13. Polyurethan-Elastomer gemäß Anspruch 12, **dadurch gekennzeichnet, dass** man das Polyurethan aufschmilzt und in einem Extruder oder in einem Spritzgussverfahren verarbeitet.

14. Polyurethan-Elastomer gemäß einem der Ansprüche 11 bis 13, **dadurch gekennzeichnet, dass** eine Siliciumdioxid-Dispersion gemäß Anspruch 1 oder 4 enthaltend mindestens ein Polyesterol gemäß Anspruch 10 und eine Isocyanat-haltige Verbindung ausgewählt aus Methandiphenyldiisocyanat (MDI), Dicycolhexylmethandiisocyanat (H12MDI), Toluoldiisocyanat, Isophorondiisocyanat, Naphthalindiisocyanat oder Hexamethylendiisocyanat umgesetzt werden.

15. Polyurethan-Elastomer gemäß einem der Ansprüche 11 bis 13, **dadurch gekennzeichnet, dass** eine Siliciumdioxid-Dispersion gemäß Anspruch 5 oder 6 enthaltend mindestens ein Polyesterol gemäß Anspruch 10 und eine Isocyanat-haltige Verbindung ausgewählt aus Methandiphenyldiisocyanat (MDI), Dicycolhexylmethandiisocyanat (H12MDI), Toluoldiisocyanat, Isophorondiisocyanat, Naphthalindiisocyanat oder Hexamethylendiisocyanat umgesetzt werden.

16. Verwendung einer Siliciumdioxid-Dispersion einem der Ansprüche 1 bis 10 zur Herstellung von Polyurethanwerkstoffen oder Polyurethan-Elastomeren.

17. Verwendung eines Polyurethan-Elastomer gemäß einem der Ansprüche 11 bis 15 zur Herstellung von Formkörpern, insbesondere von Rollen, Schuhsohlen, Verkleidungen in Automobilen, Siebe, Räder, Reifen, Transportbänder, Bauteile für Engineering, Schläuche, Beschichtungen, Kabel, Profile, Laminate, Steckverbindungen, Kabelstecker, Faltenbälge, Schleppkabel, Abstreifer, Dichtlippen, Kabelummantelungen, Dichtungen, Riemen ,Dämpfungselemente, Folien oder Fasern, in einem Guss-, Spritzguss-, Kalendrierungs-, Pulversinterungs- oder Extrusionsverfahren.

18. Polymerblend oder Mischung enthaltend mindestens ein thermoplastisches Polyurethan gemäß einem der Ansprüche 12 bis 15 und zusätzlich mindestens ein anderes Polymer, vorzugsweise ein (anderes) thermoplastisches Polyurethan, einen Polyester, Polyether oder ein Polyamid, insbesondere in einer Menge von insgesamt 5 bis 40 %, bezogen auf das thermoplastisches Polyurethan gemäß einem der Ansprüche 12 bis 15.

19. Folien, Spritzgussartikel oder Extrusionsartikel enthaltend mindestens ein thermoplastisches Polyurethan gemäß einem der Ansprüche 12 bis 15.

## Claims

1. A silicon dioxide dispersion which can be produced by a process comprising the following steps:
a) admixing of an aqueous silica sol (K) having an average particle diameter of from 1 to 150 nm, a content of silicon dioxide of from 1 to 60% by weight and a pH of from 1 to 6 with at least one chain extender to give a mixture (A) of aqueous silica sol and chain extender,
b) removal of the water from the mixture (A) obtained in step (a),
wherein the silicon dioxide comprised in the silicon dioxide dispersion is modified by means of at least one silane (S) which comprises a group which is reactive toward isocyanates and at least one polyol is added to the silicon dioxide dispersion.

2. The silicon dioxide dispersion according to claim 1, wherein, in step (b), the water is removed completely or to a residual amount of less than 0.5% by weight (based on the silicon dioxide dispersion) and/or the water is removed at a temperature which is increased stepwise in the range from 30°C to 75°C.

3. The silicon dioxide dispersion according to claim 1 or 2, wherein the chain extender is selected from a diol having a molecular weight of less than 300 g/mol, in particular from among 1,4-butanediol and monoethylene glycol.

4. The silicon dioxide dispersion according to claim 1, wherein the silane (S) has an at least monoalkoxylated silyl group, a hydroxyl-comprising substituent, an amino-comprising substituent and/or an alkyl, cycloalkyl or aryl substituent.

5. The silicon dioxide dispersion according to claim 1 or 4, wherein a silane (S) prepared by reaction of i) a trialkoxysilane which is substituted by an epoxyalkyl group and ii) a polyetheramine is used.

6. The silicon dioxide dispersion according to claim 5, wherein the compound i) is 3-glycidoxypropyltrimethoxysilane and the compound ii) is a monofunctional polyetheramine having a molecular weight of from 500 to 2500.

7. The silicon dioxide dispersion according to claim 1, wherein the polyol is a polyesterol.

8. The silicon dioxide dispersion according to claim 7, wherein the polyesterol is prepared by condensation of
a) at least one polyfunctional alcohol, preferably a diol, having from 2 to 12 carbon atoms, where the diol may optionally additionally have at least one heteroatom, in particular at least one ether function, and
b) at least one polyfunctional carboxylic acid having from 2 to 12 carbon atoms or an anhydride thereof.

9. The silicon dioxide dispersion according to any of claims 1 to 8, wherein at least one isocyanate-comprising compound is added to the silicon dioxide dispersion comprising silicon dioxide which has been modified by means of at least one silane (S).

10. The silicon dioxide dispersion according to claim 9, wherein the isocyanate-comprising compound is an organic polyisocyanate selected from among methanedi(phenyl isocyanate) (MDI), dicyclohexylmethane diisocyanate (H12MDI), tolylene diisocyanate, isophorone diisocyanate, naphthalene diisocyanate and hexamethylene diisocyanate.

11. A polyurethane elastomer which can be produced by reaction of at least one silicon dioxide dispersion according to any of claims 1 to 6 which additionally comprises at least one polyol and at least one isocyanate-comprising compound.

12. The polyurethane elastomer according to claim 11, wherein the elastomer is a thermoplastic polyurethane (TPU).

13. The polyurethane elastomer according to claim 12, wherein the polyurethane is melted and processed in an extruder or in an injection molding process.

14. The polyurethane elastomer according to any of claims 11 to 13, wherein a silicon dioxide dispersion according to claim 1 or 4 comprising at least one polyesterol according to claim 10 and an isocyanate-comprising compound selected from among methanedi(phenyl isocyanate) (MDI), dicyclohexylmethane diisocyanate (H12MDI), tolylene diisocyanate, isophorone diisocyanate, naphthalene diisocyanate and hexamethylene diisocyanate are reacted.

15. The polyurethane elastomer according to any of claims 11 to 13, wherein a silicon dioxide dispersion according to claim 5 or 6 comprising at least one polyesterol according to claim 10 and an isocyanate-comprising compound selected from among methanedi(phenyl isocyanate) (MDI), dicyclohexylmethane diisocyanate (H12MDI), tolylene diisocyanate, isophorone diisocyanate, naphthalene diisocyanate and hexamethylene diisocyanate are reacted.

16. The use of a silicon dioxide dispersion according to any of claims 1 to 10 for producing polyurethane materials or polyurethane elastomers.

17. The use of a polyurethane elastomer according to any of claims 11 to 15 for producing moldings, in particular rollers, shoe soles, linings in automobiles, sieves, wheels, tires, conveyor belts, components for engineering, hoses, coatings, cables, profiles, laminates, plug connections, cable plugs, bellows, towing cables, wipers, sealing lips, cable sheathing, seals, belts, damping elements, films or fibers, in a casting, injection molding, calendering, powder sintering or extrusion process.

18. A polymer blend or mixture comprising at least one thermoplastic polyurethane according to any of claims 12 to 15 and additionally at least one other polymer, preferably a (different) thermoplastic polyurethane, a polyester, polyether or a polyamide, in particular in a total amount of from 5 to 40%, based on the thermoplastic polyurethane according to any of claims 12 to 15.

19. A film, injection molded article or extruded article comprising at least one thermoplastic polyurethane according to any of claims 12 to 15.

## Revendications

1. Dispersion de dioxyde de silicium, pouvant être préparée selon un procédé comprenant les étapes suivantes :
a) mélange d'un sol de silice aqueux (K) qui présente un diamètre moyen de particule de 1 à 150 Nm, une teneur en dioxyde de silicium de 1 à 60 % en poids et un pH de 1 à 6, avec au moins un prolongateur de chaîne pour l'obtention d'un mélange (A) de sol de silice aqueux et prolongateur de chaîne,
b) élimination de l'eau du mélange (A) obtenu dans l'étape (a),
**caractérisée en ce que** le dioxyde de silicium contenu dans la dispersion de dioxyde de silicium est modifié avec au moins un silane (S) qui contient un groupe réactif vis-à-vis d'isocyanates et **en ce qu'**on ajoute au moins un polyol à la dispersion de dioxyde de silicium.

2. Dispersion de dioxyde de silicium selon la revendication 1, **caractérisée en ce que** dans l'étape (b) on élimine l'eau en totalité ou jusqu'à une quantité résiduelle de moins de 0,5 % en poids (par rapport à la dispersion de dioxyde de silicium) et/ou on élimine l'eau à une température s'élevant graduellement dans une plage de 30 °C à 75°C.

3. Dispersion de dioxyde de silicium selon la revendication 1 ou 2, **caractérisée en ce que** le prolongateur de chaîne est choisi parmi un diol ayant une masse moléculaire inférieure à 300 g/mole, en particulier parmi le 1,4-butanediol et le monoéthylèneglycol.

4. Dispersion de dioxyde de silicium selon la revendication 1, **caractérisée en ce que** le silane (S) comporte un groupe silyle au moins une fois alcoxylé, un substituant contenant le groupe hydroxy, un substituant contenant le groupe amino et/ou un substituant alkyle, cycloalkyle ou aryle.

5. Dispersion de dioxyde de silicium selon la revendication 1 ou 4, **caractérisée en ce qu'**on utilise un silane (S) qui est préparé par mise en réaction de i) un trialcoxysilane qui est substitué par un groupe époxyalkyle, et ii) une polyétheramine.

6. Dispersion de dioxyde de silicium selon la revendication 5, **caractérisée en ce que** le composé i) est le 3-glycidoxypropyltriméthoxysilane et le composé ii) est une polyétheramine monofonctionnelle ayant une masse moléculaire de 500 à 2 500.

7. Dispersion de dioxyde de silicium selon la revendication 1, **caractérisée en ce que** le polyol est un polyesterol.

8. Dispersion de dioxyde de silicium selon la revendication 7, **caractérisée en ce que** le polyesterol est préparé par condensation de
a) au moins un alcool polyfonctionnel, de préférence un diol ayant de 2 à 12 atomes de carbone, le diol pouvant éventuellement comporter en outre au moins un hétéroatome, en particulier au moins une fonction éther, et
b) au moins un acide carboxylique polyfonctionnel ayant de 2 à 12 atomes de carbone ou un anhydride de celui-ci.

9. Dispersion de dioxyde de silicium selon l'une quelconque des revendications 1 à 8, **caractérisée en ce qu'**on ajoute au moins un composé contenant un isocyanate à la dispersion de dioxyde de silicium contenant du dioxyde de silicium qui est modifié avec au moins un silane (S).

10. Dispersion de dioxyde de silicium selon la revendication 9, **caractérisée en ce que** le composé contenant un isocyanate est un polyisocyanate organique, choisi parmi le méthanediphényldiisocyanate (MDI), le dicyclohexylméthanediisocyanate (H12MDI), le toluènediisocyanate, l'isophoronediisocyanate, le naphtalènediisocyanate ou l'hexaméthylènediisocyanate.

11. Élastomère-polyuréthane pouvant être produit par mise en réaction d'au moins une dispersion de dioxyde de silicium selon l'une quelconque des revendications 1 à 6, en outre contenant au moins un polyol et au moins un composé contenant un isocyanate.

12. Élastomère-polyuréthane selon la revendication 11, **caractérisé en ce qu'**il s'agit d'un polyuréthane thermoplastique (TPU).

13. Élastomère-polyuréthane selon la revendication 12, **caractérisé en ce qu'**on fait fondre le polyuréthane et on le met en oeuvre dans une extrudeuse ou dans un procédé de moulage par injection.

14. Élastomère-polyuréthane selon l'une quelconque des revendications 11 à 13, **caractérisé en ce qu'**on fait réagir une dispersion de dioxyde de silicium selon la revendication 1 ou 4, contenant au moins un polyesterol selon la revendication 10 et un composé contenant un isocyanate, choisi parmi le méthanediphényldiisocyanate (MDI), le dicyclohexyl-méthanediisocyanate (H12MDI), le toluènediisocyanate, l'isophoronediisocyanate, le naphtalènediisocyanate ou l'hexaméthylènediisocyanate.

15. Élastomère-polyuréthane selon l'une quelconque des revendications 11 à 13, **caractérisé en ce qu'**on fait réagir une dispersion de dioxyde de silicium selon la revendication 5 ou 6, contenant au moins un polyesterol selon la revendication 10 et un composé contenant un isocyanate, choisi parmi le méthanediphényldiisocyanate (MDI), le dicyclohexyl-méthanediisocyanate (H12MDI), le toluènediisocyanate, l'isophoronediisocyanate, le naphtalènediisocyanate ou l'hexaméthylènediisocyanate.

16. Utilisation d'une dispersion de dioxyde de silicium selon l'une quelconque des revendications 1 à 10, pour la production de matériaux polyuréthane ou d'élastomères polyuréthane.

17. Utilisation d'un élastomère-polyuréthane selon l'une quelconque des revendications 11 à 15 pour la production de corps moulés, en particulier de rouleaux, de semelles de chaussures, d'habillages dans des automobiles, de tamis, roues, pneumatiques, bandes transporteuses, d'éléments de construction pour engineering, de tuyaux souples, revêtements, câbles, profilés, stratifiés, connecteurs enfichables, connecteurs de câbles, soufflets, câbles de traction, racles, lèvres d'étanchéité, gaines de câbles, joints d'étanchéité, courroies de commande, éléments amortisseurs, films ou fibres, dans un procédé de coulée, moulage par injection, calandrage, frittage de poudre ou d'extrusion.

18. Mélange ou alliage de polymères, contenant au moins un polyuréthane thermoplastique selon l'une quelconque des revendications 12 à 15 et en outre au moins un autre polymère, de préférence un (autre) polyuréthane thermoplastique, un polyester, polyéther ou un polyamide, en particulier en une quantité d'au total 5 à 40 %, par rapport au polyuréthane thermoplastique selon l'une quelconque des revendications 12 à 15.

19. Films, articles moulés par injection ou articles extrudés contenant au moins un polyuréthane thermoplastique selon l'une quelconque des revendications 12 à 15.
